# EUROPEAN PATENT APPLICATION

(11) **EP 4 819 308 A1**
(43) Date of publication of application: **07.10.2026**
(21) Application number: 24897472.7
(22) Date of filing: 22.11.2024
(51) Int. Cl.: H01M 10/658, H01M 10/613, H01M 10/643, H01M 10/651, H01M 50/204, H01M 50/213, H01M 50/291

(54) **BATTERY PACK**

(30) Priority: 30.11.2023 JP 2023202862
(71) Applicant: Panasonic Intellectual Property Management Co., Ltd., Kadoma-shi, Osaka 571-0057 (JP)
(72) Inventor: TAKEDA, Kensaku, Kadoma-shi, Osaka 571-0057 (JP)
(74) Representative: Eisenführ Speiser
(86) International application number: PCT/JP2024/041499
(87) International publication number: WO 2025/115786

(57) **Abstract**

In a battery pack, a battery holder in which a plurality of secondary battery cells are housed is housed in an exterior case. Each of the secondary battery cells is a cylindrical battery, and among the plurality of secondary battery cells housed in the battery holder, a secondary battery cell disposed at a position having a smallest number of adjacent secondary battery cells is defined as target battery cell A. In the battery holder, a plurality of holding tubular parts are integrally molded to hold the plurality of secondary battery cells in a parallel orientation, and in the plurality of holding tubular parts, partition wall parts formed between the adjacent secondary battery cells include a target partition wall part formed between target battery cell A and the adjacent secondary battery cell and non-target partition wall parts formed between the secondary battery cells other than target battery cell A, and a thickness of the target partition wall part is greater than an average value of thicknesses of all the partition wall parts to suppress heat conduction with the adjacent secondary battery cell.

## Description

### TECHNICAL FIELD

The present invention relates to a battery pack in which a plurality of secondary battery cells are held in a battery holder and housed in an exterior case.

### BACKGROUND ART

Battery packs each housing a plurality of secondary battery cells in an exterior case are used as power sources for medical devices, electric cleaners, portable electric devices such as electric tools, or the like. In each of the battery packs, a plurality of secondary battery cells is incorporated in an exterior case while being housed in a battery holder in a predetermined arrangement, for example. As described above, in a battery pack including a large number of secondary battery cells, if an unsafe event such as an internal short circuit occurs in any of the secondary battery cells, there is a possibility that the secondary battery cell may generate heat and ignite and adjacent secondary battery cells may be heated by the heat and ignite and spread fire in a chain manner. In particular, if there is no route for releasing the generated heat to the outside, there is a possibility that the trapped heat may be locally concentrated in the adjacent secondary battery cells, overheat the adjacent secondary battery cells, and lead to chain ignition. As described above, if an unsafe event occurs in any of the secondary battery cells in the battery pack, the secondary battery cell generates heat, and the secondary battery cell generates heat, the heat generated in the abnormal cell propagates to the other secondary battery cells, leading to fire spreading, which is extremely dangerous.

### Citation List

### Patent Literature

PTL 1: International Patent Publication No. 2013/076770

### SUMMARY OF THE INVENTION

The present invention has been developed for the purpose of preventing adjacent secondary battery cells from spreading fire in a chain manner due to heat generated from an abnormal battery cell even when an unsafe event accompanied by smoking or ignition occurs in any of secondary battery cells in a battery pack including the plurality of secondary battery cells.

An object of an aspect of the present disclosure is to provide a battery pack capable of effectively preventing a chain reaction of fire spreading from an abnormal battery cell to an adjacent secondary battery cell by controlling propagation of heat from the abnormal battery cell to the adjacent secondary battery cell if the secondary battery cell housed in an exterior case becomes abnormal and generates heat. Note that the description of the object and issues of the present disclosure does not preclude the existence of other objects and issues. One aspect of the present disclosure is not required to solve all of these issues. Furthermore, issues other than these can be extracted from the description, drawings, and claims of the present disclosure.

A battery pack according to an aspect of the present disclosure includes: a plurality of secondary battery cells; a battery holder that houses the plurality of secondary battery cells; and an exterior case that houses the battery holder. Each of the plurality of secondary battery cells is a cylindrical battery, and among the plurality of secondary battery cells housed in the battery holder, at least one secondary battery cell disposed at a position having a smallest number of adjacent secondary battery cells is defined as a target battery cell. The battery holder includes a plurality of holding tubular parts each of which houses a corresponding one of the plurality of secondary battery cells inside, the plurality of holding tubular parts being integrally molded to hold the plurality of secondary battery cells in parallel to each other. The plurality of holding tubular parts include: partition wall parts formed between adjacent secondary battery cells among the plurality of secondary battery cells; and an outer peripheral wall part defining an outer surface of the battery holder. The partition wall parts include: a target partition wall part formed between the target battery cell and a secondary battery cell adjacent to the target battery cell; and non-target partition wall parts formed between adjacent secondary battery cells other than the target battery cell, and a thickness (T1) of the target partition wall part is greater than an average value (Ta) of thicknesses of all the partition wall parts, to suppress heat conduction between adjacent secondary battery cells among the plurality of secondary battery cells.

According to the battery pack of the present disclosure, if a secondary battery cell housed in the exterior case becomes abnormal and generates heat, it is possible to implement an advantage that propagation of heat from the abnormal battery cell to the surroundings can be controlled to effectively prevent a chain reaction of fire spreading to an adjacent secondary battery cell.

### BRIEF DESCRIPTION OF THE DRAWINGS

Fig. 1 is a perspective view of a battery pack according to a first exemplary embodiment of the present disclosure.
Fig. 2 is an exploded perspective view of the battery pack illustrated in Fig. 1.
Fig. 3 is an exploded perspective view in which the battery pack illustrated in Fig. 2 is further disassembled.
Fig. 4 is an exploded perspective view of the battery pack illustrated in Fig. 3 as viewed from below.
Fig. 5 is a vertical transverse sectional view of the battery pack taken along line V-V illustrated in Fig. 1.
Fig. 6 is a vertical longitudinal sectional view of the battery pack taken along line VI-VI illustrated in Fig. 5.
Fig. 7 is a vertical longitudinal sectional view of the battery pack taken along line VII-VII illustrated in Fig. 5.
Fig. 8 is an exploded sectional view corresponding to a cross section of the battery pack taken along line VIII-VIII illustrated in Fig. 5.
Fig. 9 is a transverse sectional view of a battery holder in which secondary battery cells are housed.
Fig. 10 is an enlarged sectional view of a main part of the battery pack illustrated in Fig. 5.
Fig. 11 is an exploded sectional view of a battery pack according to a second exemplary embodiment.
Fig. 12 is a transverse sectional view illustrating a state in which a secondary battery is housed in a battery holder according to a comparative example.

### DESCRIPTION OF EMBODIMENT

First, one attention point of the present disclosure will be described. In a battery pack in which a plurality of secondary battery cells are housed in a battery holder and the battery holder is housed in an exterior case, if an unsafe event such as an internal short circuit occurs in any of the secondary battery cells, and the secondary battery cell ignites, there is a possibility that adjacent secondary battery cells may be heated by the heat and ignite and spread fire in a chain manner. In order to solve such a problem, a structure for controlling heat conduction from an abnormal battery cell to an adjacent secondary battery cell is studied.

As a battery holder that houses a plurality of secondary battery cells in a predetermined orientation, there is a battery holder having a structure in which a plurality of cylindrical holding tubular parts that isolate and partition each secondary battery cell are connected. In the battery holder having this structure, heat conduction between secondary battery cells adjacent to each other can be controlled by adjusting a thickness of a partition wall part formed between the secondary battery cells adjacent to each other. For example, in the battery holder, by thickening the partition wall part between the adjacent secondary battery cells, it is possible to suppress heat conduction from the abnormal battery cell to the adjacent secondary battery cell and prevent adverse effects due to fire spreading from the abnormal battery cell. However, the structure in which the partition wall part between the adjacent secondary battery cells is thickened has an adverse effect that the outer shape of the battery holder becomes large when the plurality of secondary battery cells are housed side by side in the diameter direction. In particular, it is extremely difficult to secure a necessary and sufficient distance between cells within a limited pack volume such as a small battery pack. In addition, by thickening the partition wall part between the secondary battery cells, the amount of resin to be used increases and the manufacturing cost increases, and when the thick partition wall part is resin-molded, measures for preventing a sink mark are also required. Therefore, the structure of thickening the partition wall part between the secondary battery cells is not necessarily an effective method in all battery packs.

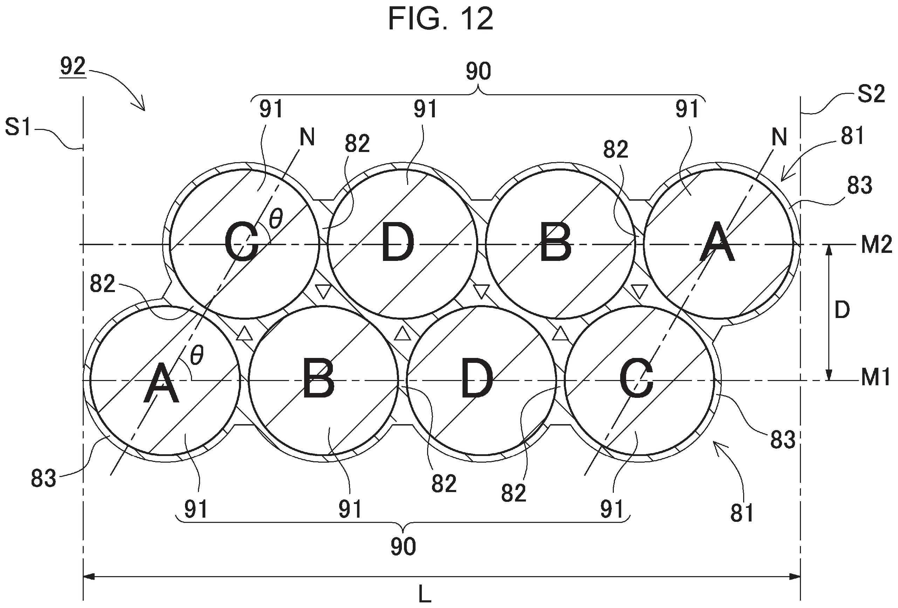

In view of the above, the inventor of the present invention conducted an experiment as to whether or not fire spreading occurs in adjacent secondary battery cells if an abnormality occurs in a secondary battery cell housed at a specific position of the battery holder while making the partition wall part between the adjacent secondary battery cells uniform in thickness without increasing the thickness of the partition wall part. In this experiment, as illustrated in Fig. 12, battery holder 92 having a structure in which a total of eight secondary battery cells 91 are arranged, with four cells 91 side by side in a lateral direction in each of two upper and lower tiers in a staggered stacking orientation was used, and an abnormality was caused in secondary battery cells 91 arranged at positions indicated by A to D in Fig. 12 while thicknesses of partition wall parts 82 between adjacent secondary battery cells 91 were uniform. As a result of the experiment, in a case where the thicknesses of all partition wall parts 82 were set to a specific value, if an abnormality occurred in secondary battery cell 91 at the position indicated by A, fire spreading occurred in adjacent secondary battery cells 91 arranged at positions indicated by B and C, but if an abnormality occurred in secondary battery cells 91 at the positions indicated by B to D, no fire spreading occurred in any of adjacent secondary battery cells 91. From the experimental results, the inventor of the present invention hypothesized that if an abnormality occurs in secondary battery cell 91 arranged at the position indicated by A, heat generated from the abnormal battery cell concentrates on two secondary battery cells 91 arranged at the positions indicated by B and C, whereas if an abnormality occurs in secondary battery cells 91 arranged at the positions indicated by B to D, heat generated from the abnormal battery cells is distributed and conducted to adjacent three to four secondary battery cells 91, and adjacent secondary battery cells 91 absorb the heat generated from the abnormal battery cells due to the heat capacity of adjacent secondary battery cells 91, thereby suppressing fire spreading.

Furthermore, as a result of studying various structures by repeating trial and error based on the above hypothesis, the inventor of the present invention has set, as a target battery cell, a secondary battery cell (corresponding to the secondary battery cell at the position indicated by A in Fig. 12) arranged at a position where the number of adjacent secondary battery cells is the smallest among the plurality of secondary battery cells housed in the battery holder, and has set the thickness of the partition wall part disposed between the target battery cell and the adjacent secondary battery cells to be greater than the above-described specific value, thereby making it possible to prevent fire spreading to the adjacent secondary battery cells arranged at the positions indicated by B and C, and even if the thickness of the partition wall part disposed between the other secondary battery cells excluding the target battery cell is less than the above-described specific value, the inventor of the present invention has found that no fire spreading occurs in any secondary battery cell, thereby achieving the present invention. That is, according to the present invention, in a battery holder in which a plurality of secondary batteries are housed, a secondary battery cell disposed at a position where the number of adjacent secondary battery cells is the smallest is set as a target battery cell, and a partition wall part between the target battery cell and an adjacent secondary battery cell is thickened and a partition wall part between the secondary battery cells excluding the target battery cell is thinned, whereby a battery pack is implemented, which can effectively prevent fire spreading even if an abnormality occurs in any of the secondary battery cells while suppressing an increase in the outer shape of the battery holder.

A battery pack according to an exemplary embodiment of the present disclosure includes: a plurality of secondary battery cells; a battery holder that houses the plurality of secondary battery cells; and an exterior case that houses the battery holder. Each of the plurality of secondary battery cells is a cylindrical battery, and among the plurality of secondary battery cells housed in the battery holder, at least one secondary battery cell disposed at a position having a smallest number of adjacent secondary battery cells is defined as a target battery cell. The battery holder includes a plurality of holding tubular parts each of which houses a corresponding one of the plurality of secondary battery cells inside, the plurality of holding tubular parts being integrally molded to hold the plurality of secondary battery cells in parallel to each other. The plurality of holding tubular parts include: partition wall parts formed between adjacent secondary battery cells among the plurality of secondary battery cells; and an outer peripheral wall part defining an outer surface of the battery holder. The partition wall parts include: a target partition wall part formed between the target battery cell and a secondary battery cell adjacent to the target battery cell; and non-target partition wall parts formed between adjacent secondary battery cells other than the target battery cell, and a thickness (T1) of the target partition wall part is greater than an average value (Ta) of thicknesses of all the partition wall parts, to suppress heat conduction between adjacent secondary battery cells among the plurality of secondary battery cells.

According to the above configuration, among the plurality of secondary battery cells housed in the battery holder, the secondary battery cell disposed at the position where the number of adjacent secondary battery cells is the smallest is set as the target battery cell, and the thickness (T1) of the target partition wall part formed between the secondary battery cell adjacent to the target battery cell and the target battery cell is greater than the average value (Ta) of the thicknesses of all the target partition wall parts. Therefore, even if an abnormality occurs in the target battery cell disposed at a position where fire spreading most easily occurs at the time of heat generation, heat conduction with the adjacent secondary battery cell can be suppressed to effectively prevent fire spreading by providing a sufficient interval by the thick target partition wall part.

In the present specification, a thickness of each of the partition wall parts is, in a transverse sectional view of the battery holder, a thickness measured along a straight line connecting centers of adjacent secondary battery cells, and, in a case where a partition wall part has a curved portion along an outer peripheral surface of a corresponding one of the plurality of secondary battery cells, the thickness of the partition wall part is a thickness at a portion having a minimum thickness.

In the battery pack according to another exemplary embodiment of the present disclosure, a non-target partition wall part having a minimum thickness among the non-target partition wall parts may be defined as a specific partition wall part, and a thickness (T2) of the specific partition wall part may be less than or equal to an average value (Tb) of thicknesses of all the non-target partition wall parts.

According to the above configuration, among the non-target partition wall parts formed between the secondary battery cells excluding the target battery cell, the thickness (T2) of the specific partition wall part having the minimum thickness is less than the average value (Tb) of the thicknesses of all the non-target partition wall parts. Therefore, heat conduction between the secondary battery cells adjacent to each other via the specific partition wall part is promoted while an increase in the outer shape of the battery holder is suppressed, and fire spreading is suppressed due to the heat capacity of the secondary battery cells.

In the battery pack according to another exemplary embodiment of the present disclosure, in the battery holder, the plurality of holding tubular parts may be arranged to house, in a plurality of tiers, a plurality of battery rows in which the plurality of secondary battery cells are arranged in a diameter direction, the plurality of battery rows stacked in the plurality of tiers may be arranged such that, between a battery row arranged in a lower tier and a battery row arranged in an upper tier, the secondary battery cells in one of the plurality of battery rows are positioned in valleys defined by the adjacent secondary battery cells in another of the plurality of battery rows, and in the battery holder, the non-target partition wall parts between the adjacent secondary battery cells other than the target battery cell in each of the battery rows may be each defined as the specific partition wall part.

According to the above configuration, in the battery holder, the plurality of holding tubular parts are disposed to house, in the plurality of tiers, the battery rows in which the plurality of secondary battery cells are arranged in the diameter direction, and in each of the battery rows, the non-target partition wall part formed between the secondary battery cells excluding the target battery cell is set as the specific partition wall part. Therefore, by offsetting the thickness (T1) of the target partition wall part and the thickness (T2) of the specific partition wall part against each other, it is possible to effectively prevent the overall length of the battery rows from becoming longer and to suppress an increase in the outer shape of the battery holder.

In the battery pack according to another exemplary embodiment of the present disclosure, in the battery holder, the plurality of holding tubular parts may be arranged to house, in two tiers, the plurality of battery rows in which the plurality of secondary battery cells are arranged in the diameter direction, in the plurality of battery rows stacked in the two tiers, target battery cells may be arranged at one end of the battery row in the lower tier and at an opposite end of the battery row in the upper tier, respectively, and lateral positional offset between the battery row in the lower tier and the battery row in the upper tier may be less than or equal to a radius of each of the plurality of secondary battery cells.

According to the above configuration, with the structure in which the battery rows in which the plurality of secondary battery cells are arranged in the diameter direction are housed in the two tiers, it is possible to effectively prevent an increase in the overall length of the battery holder while setting an interval between the secondary battery cells housed in the battery holder to an optimum interval for preventing fire spreading.

In the battery pack according to another exemplary embodiment of the present disclosure, in the battery holder, the plurality of holding tubular parts may be arranged to house, in two tiers, the plurality of battery rows in which the plurality of secondary battery cells are arranged in the diameter direction, an angle defined between a center line, which connects a center of the target battery cell and a center of a laterally adjacent battery cell adjacent to the target battery cell in a lateral direction, and a center line, which connects the center of the target battery cell and a center of a vertically adjacent battery cell adjacent to the target battery cell in a vertical diagonal direction, may be greater than 60 degrees, and the non-target partition wall part between the laterally adjacent battery cell and the vertically adjacent battery cell may be defined as a suppression partition wall part, and a thickness (T3) of the suppression partition wall part may be greater than the thickness (T1) of the target partition wall part.

According to the above configuration, as a structure in which the battery rows in which the plurality of secondary battery cells are arranged in the diameter direction are housed in the two tiers, it is possible to effectively prevent an increase in the overall length of the battery holder while setting an interval between the secondary battery cells housed in the battery holder to an optimum interval for preventing fire spreading, and it is possible to prevent fire spreading by suppressing interference between the laterally adjacent battery cell and the vertically adjacent battery cell heated by the target battery cell when the target battery cell generates heat by setting the thickness (T3) of the suppression partition wall part formed between the laterally adjacent battery cell and the vertically adjacent battery cell arranged in the vertical diagonal direction to be greater than the thickness (T1) of the target partition wall part.

In the battery pack according to another exemplary embodiment of the present disclosure, in the battery holder, the plurality of holding tubular parts may be arranged to house a single battery row in which the plurality of secondary battery cells are arranged in a diameter direction, the plurality of secondary battery cells positioned at both ends of the single battery row may be defined as the target battery cells, and in the battery holder, the non-target partition wall parts between the adjacent secondary battery cells other than the target battery cell may be each defined as the specific partition wall part.

According to the above configuration, the battery holder houses the single battery row in which the plurality of secondary battery cells are arranged in the diameter direction, and includes the target battery cells disposed at both ends of the battery row, and the specific partition wall part is disposed between the secondary battery cells excluding the target battery cell. Therefore, by offsetting the thickness (T1) of the target partition wall part and the thickness (T2) of the specific partition wall part against each other, it is possible to effectively prevent an increase in the overall length of the battery row and to prevent an increase in the outer shape of the battery holder.

In the battery pack according to another exemplary embodiment of the present disclosure, a difference (T1 - T2) between the thickness (T1) of the target partition wall part and the thickness (T2) of the specific partition wall part may be greater than or equal to 3.5% of a radius (R) of each of the plurality of secondary battery cells.

According to the above configuration, by changing the difference between the thickness (T1) of the target partition wall part and the thickness (T2) of the specific partition wall part according to the radius (R) of each of the secondary battery cells, the heat capacity of each of the secondary battery cells excluding the target battery cell, particularly, the heat capacity of the secondary battery cell facing the thinnest specific partition wall part, can be effectively used, while attenuation of heat conduction that suppresses fire spreading is secured by the battery holder for the target battery cell facing the thick target partition wall part.

In the battery pack according to another exemplary embodiment of the present disclosure, the thickness (T1) of the target partition wall part may be greater than or equal to 1.5 mm, and the thickness (T2) of the specific partition wall part may be less than or equal to 1.1 mm.

In the battery pack according to another exemplary embodiment of the present disclosure, the battery holder may include a heat capacity part that is coupled to an outer side of the plurality of holding tubular parts to absorb heat of the plurality of secondary battery cells conducted from the plurality of holding tubular parts, the heat capacity part may be positioned in a valley portion defined between adjacent holding tubular parts among the plurality of holding tubular parts, and include a plurality of connecting ribs that is arranged in an extending direction of the valley portion and connects the adjacent holding tubular parts to each other, each of a plurality of groove portions may be formed between adjacent connecting ribs among the plurality of connecting ribs, and each of the plurality of groove portions may serve as a sink mark prevention recess during resin molding of the heat capacity part.

According to the above configuration, the heat capacity part that is coupled to the outer sides of the holding tubular parts and absorbs the heat of the secondary battery cells conducted from the holding tubular parts is disposed, and the heat capacity part includes the plurality of connecting ribs that are positioned in the valley portion formed between the holding tubular parts adjacent to each other, are arranged in the extending direction of the valley portion, and connect peripheral wall parts adjacent to each other. Therefore, the heat capacity part having a large volume is formed while effectively using a space of the valley portion formed between the holding tubular parts, heat of the secondary battery cells that have generated the heat can be effectively absorbed, and the connecting ribs that connect the adjacent holding tubular parts can efficiently conduct the heat from the holding tubular parts to the heat conduction part even when the secondary battery cell housed in any of the holding tubular parts generates heat. In addition, the plurality of connecting ribs that connect the peripheral wall parts adjacent to each other have an advantage that rigidity of the battery holder can be improved as reinforcing ribs. Furthermore, the heat capacity part has the groove portions formed between the connecting ribs adjacent to each other, and the groove portions serve as sink mark prevention recesses during resin molding of the heat capacity part. Therefore, it is possible to effectively prevent a sink mark during resin molding by forming the deep sink mark prevention recesses by effectively utilizing the space of the valley portion.

In the battery pack according to another exemplary embodiment of the present disclosure, the exterior case may include a coupling heat capacity part on an inner surface of the exterior case, the coupling heat capacity part being thermally coupled to the battery holder to absorb heat conducted from the battery holder, the coupling heat capacity part may include a plurality of heat conduction protrusions protruding from the inner surface of the exterior case, and the plurality of heat conduction protrusions may be disposed at positions facing the plurality of groove portions disposed in the battery holder, in the battery holder, the plurality of groove portions may be formed as a plurality of fitting recesses into which the plurality of heat conduction protrusions are fitted, and in a state where the battery holder is housed in the exterior case, the plurality of heat conduction protrusions and the plurality of fitting recesses may be fitted to thermally couple the battery holder and the exterior case, and heat generated from the plurality of secondary battery cells may be conducted from the battery holder to the exterior case and is dissipated to outside.

According to the above configuration, in the exterior case, the plurality of heat conduction protrusions are disposed so as to protrude from the inner surface as the coupling heat capacity part that is thermally coupled to the battery holder and absorbs heat conducted from the battery holder, and the battery holder has the plurality of groove portions as the fitting recesses into which the heat conduction protrusions are fitted. Therefore, in a state where the battery holder is housed in the exterior case, the heat conduction protrusions are fitted into the fitting recesses to allow the heat of the cylindrical secondary battery to be conducted from the battery holder to the exterior case while the heat is absorbed by the heat capacity part and the coupling heat capacity part, so that the heat can be efficiently dissipated to the outside, and it is possible to effectively prevent heat of the secondary battery cell that has generated the heat from overheating the adjacent secondary battery cells and causing fire spreading in the adjacent secondary battery cells.

Hereinafter, exemplary embodiments of the present disclosure will be described with reference to the drawings. However, the exemplary embodiments described below are examples for embodying the technical idea of the present disclosure, and the present disclosure is not limited to the exemplary embodiments described below. Moreover, in the present specification, members indicated in the claims are not limited to the members described in the exemplary embodiments. In particular, the dimensions, materials, shapes, relative arrangements, and the like of components described in the exemplary embodiments are not intended to limit the scope of the present disclosure exclusively unless otherwise specified, and are merely illustrative examples. The sizes and positional relationships of members illustrated in each drawing may be exaggerated to clarify the explanation. In the following description, the same names and reference marks indicate the same or similar members, so that detailed description thereof will be omitted as appropriate. Additionally, each element constituting the present invention may include an aspect in which a plurality of elements is formed of one member and the one member serves as the plurality of elements, or conversely, a function of one member may be shared and implemented by a plurality of members.

The battery pack according to the present disclosure can be suitably used as a battery pack used for a power source for a portable electric device such as a portable medical device, an electric cleaner, or an electric tool. In addition, the battery pack can be appropriately used as a power source for a moving body such as an assist bicycle or an electric cart. Hereinafter, as an exemplary embodiment of the present disclosure, a battery pack used as a power source for a pulse oximeter of a medical device will be described.

### [First exemplary embodiment]

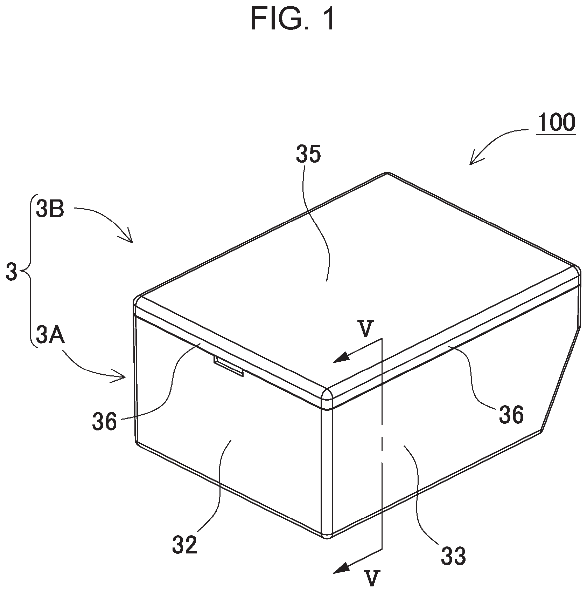

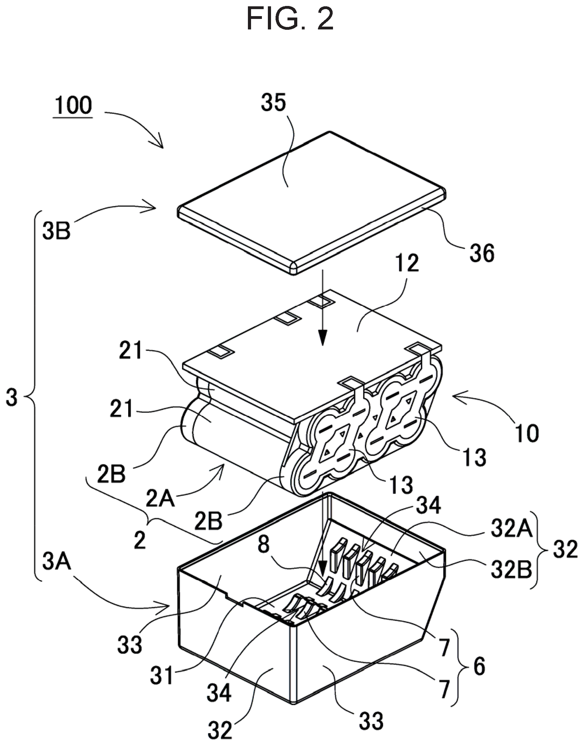

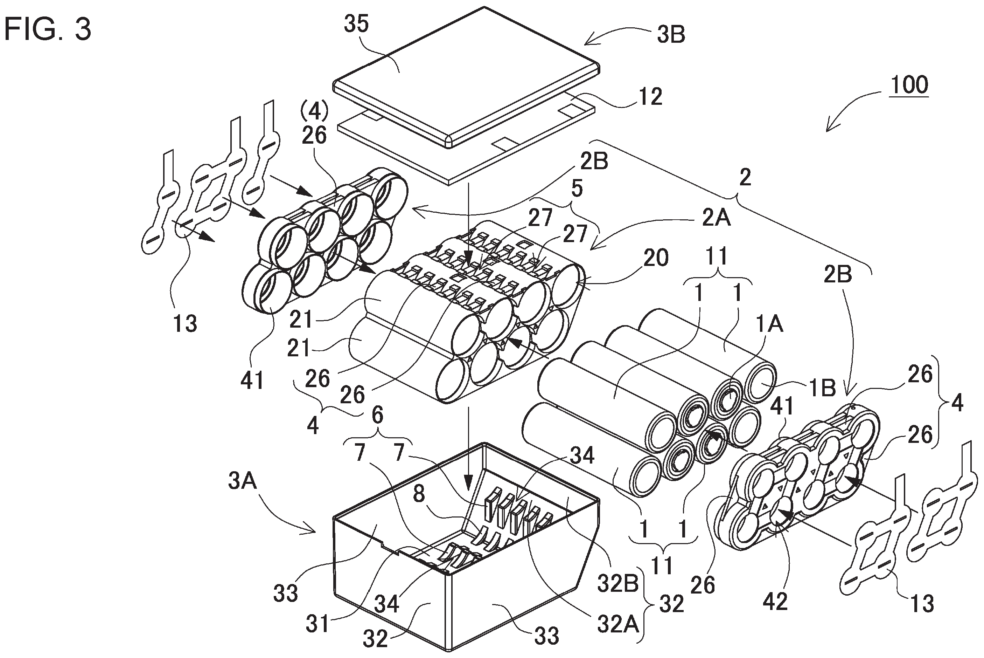

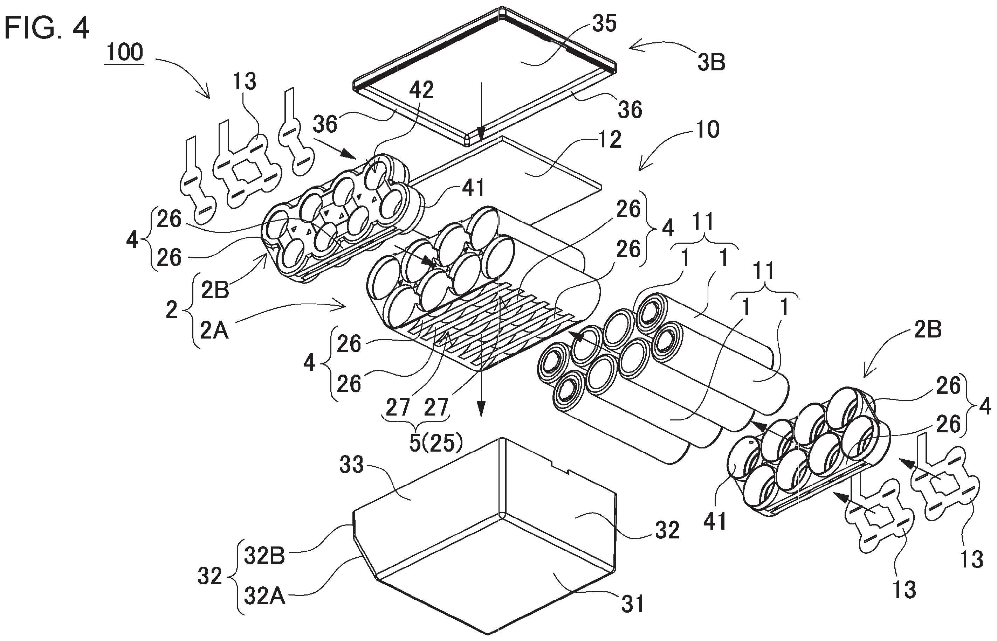

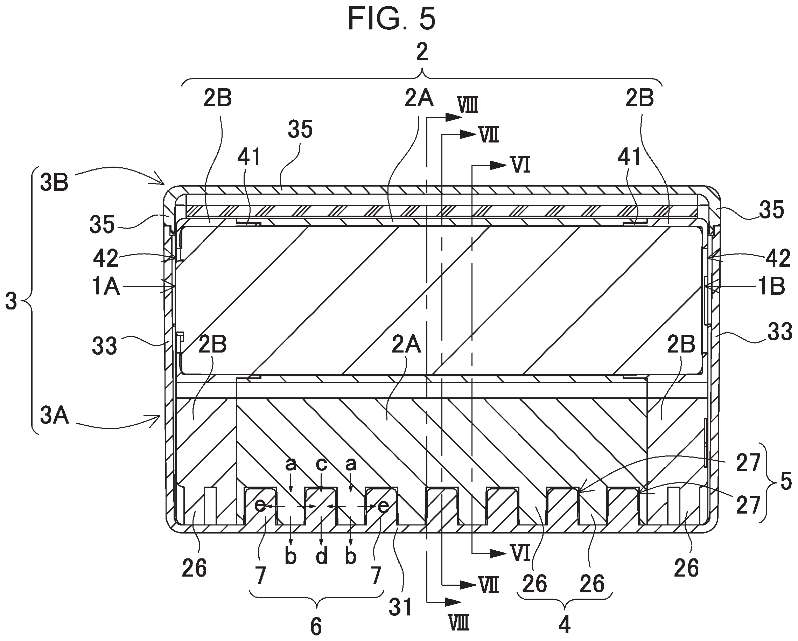

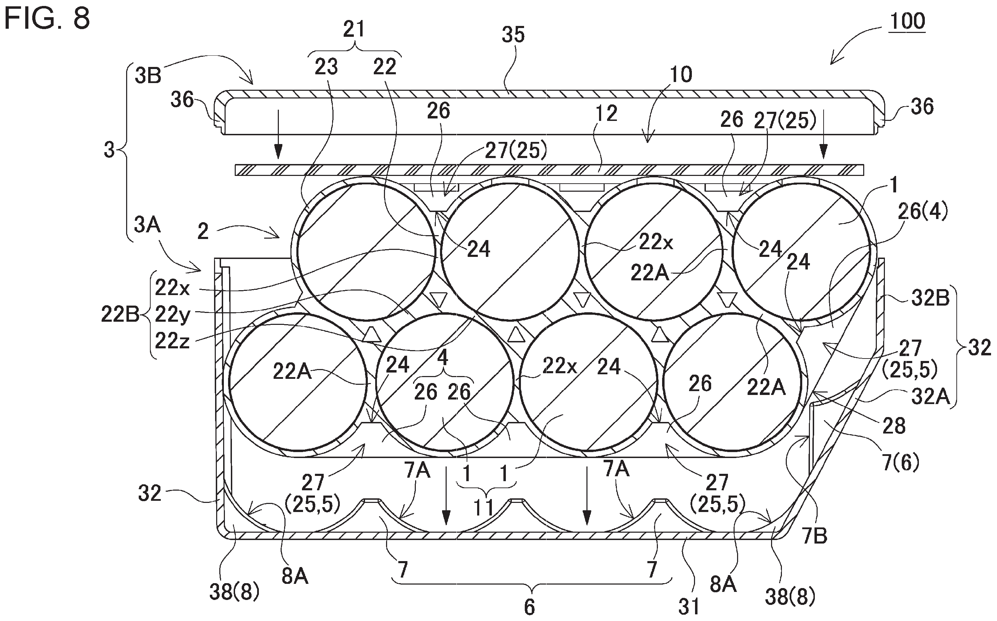

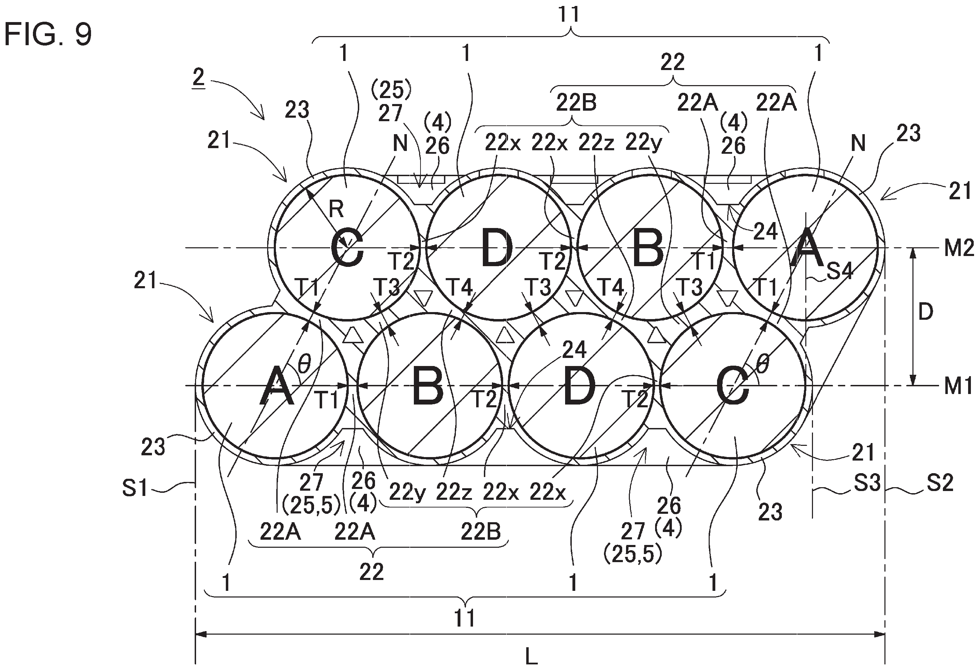

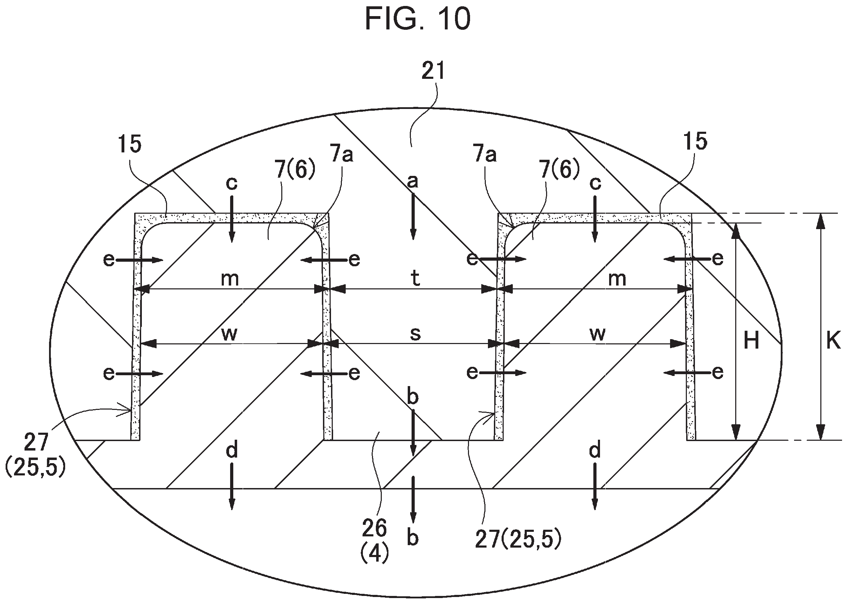

Figs. 1 to 9 illustrate a battery pack according to a first exemplary embodiment of the present disclosure. In these drawings, Fig. 1 is a perspective view illustrating the battery pack according to the first exemplary embodiment, Fig. 2 is an exploded perspective view of the battery pack illustrated in Fig. 1, Fig. 3 is an exploded perspective view in which the pack battery illustrated in Fig. 2 is further disassembled, Fig. 4 is an exploded perspective view of the pack battery illustrated in Fig. 3 as viewed from below, Fig. 5 is a vertical transverse sectional view of the battery pack taken along line V-V illustrated in Fig. 1, Figs. 6 and 7 are a vertical longitudinal sectional view of the battery pack taken along line VI-VI illustrated in Fig. 5 and a vertical longitudinal sectional view of the battery pack taken along line VII-VII illustrated in Fig. 5, Fig. 8 is an exploded sectional view corresponding to a cross section of the battery pack taken along line VIII-VIII illustrated in Fig. 5, Fig. 9 is a transverse sectional view of a battery holder in which secondary battery cells are housed, and Fig. 10 is an enlarged sectional view of a main part illustrated in Fig. 5.

Battery pack 100 illustrated in these drawings includes a plurality of secondary battery cells 1, battery holder 2 that houses secondary battery cells 1, and exterior case 3 that houses battery holder 2. Each secondary battery cell 1 is a cylindrical battery, and among the plurality of secondary battery cells 1 housed in battery holder 2, secondary battery cell 1 disposed at a position where the number of adjacent secondary battery cells 1 is the smallest is set as target battery cell A. In battery holder 2, a plurality of holding tubular parts 21 that house the plurality of respective secondary battery cells 1 inside and hold the plurality of respective secondary battery cells 1 in orientations parallel to each other are integrally molded. Each of the plurality of holding tubular part 21 includes partition wall parts 22 formed between secondary battery cells 1 adjacent to each other and outer peripheral wall part 23 forming an outer surface of the plurality of holding tubular parts 21, and partition wall parts 22 include target partition wall part 22A formed between secondary battery cell 1 adjacent to target battery cell A and target battery cell A and non-target partition wall parts 22B formed between secondary battery cells 1 excluding target battery cell A. In battery holder 2, a thickness (T1) of target partition wall part 22A is greater than an average value (Ta) of thicknesses of all partition wall parts 22, thereby suppressing heat conduction with adjacent secondary battery cell 1. Further, in battery holder 2, among non-target partition wall parts 22B, non-target partition wall part 22B having the minimum thickness is set as specific partition wall part 22x, and a thickness (T2) of specific partition wall part 22x is less than or equal to an average value (Tb) of the thicknesses of all non-target partition wall parts 22B.

### (Battery assembly 10)

In battery pack 100 illustrated in Fig. 2, battery holder 2 in which the plurality of secondary battery cells 1 are housed in a predetermined arrangement is housed as battery assembly 10 in exterior case 3. Lead plates 13 are connected to both end surfaces of each of the plurality of secondary battery cells 1 housed in the predetermined arrangement in the battery holder 2 in a predetermined connection state. Further, circuit substrate 12 is stacked on an upper surface of battery holder 2 and each lead plate 13 is connected to circuit substrate 12 to form battery assembly 10.

### (Secondary battery cells 1)

In each secondary battery cell 1 which are cylindrical batteries, an electrode body is housed in a bottomed cylindrical exterior can made of metal and filled with an electrolyte solution, and an opening of the exterior can is caulked and airtightly closed by a sealing body. In each secondary battery cell 1, the sealing body and the exterior can are used as positive and negative electrodes. In each secondary battery cell 1, an end surface closed by the sealing body is first end surface 1A, and a bottom surface of the exterior can is second end surface 1B. For such secondary battery cell 1, a nonaqueous electrolytic secondary battery having high energy efficiency, for example, a lithium ion secondary battery can be suitably used. However, for the battery pack according to the present disclosure, the secondary battery cells are not limited to lithium ion secondary batteries. As the secondary battery cells, all batteries that can be charged, for example, secondary batteries such as nickel metal hydride batteries, nickel cadmium batteries, and all-solid-state batteries can also be used.

Battery pack 100 illustrated in Figs. 3 and 4 incorporates eight secondary battery cells 1. The number of secondary battery cells 1 incorporated in battery pack 100 is an optimum number in consideration of the application and capacity of battery pack 100, the capacity of each secondary battery cell 1, and the like, and may be, for example, 3 to 20. Further, in battery pack 100 illustrated in the drawing, eight secondary battery cells 1 are connected in a four-parallel, two-series configuration via lead plates 13. However, the connection state of the plurality of secondary battery cells 1 can be variously changed according to the application and the purpose. In battery pack 100, the number of secondary battery cells 1 connected in series can be increased to increase the output voltage, and the number of secondary battery cells 1 connected in parallel can be increased to increase the maximum current to be supplied to a load and the charge/discharge capacity of the entire pack battery.

### (Battery holder 2)

In battery holder 2, the plurality of secondary battery cells 1 are disposed at fixed positions in a predetermined orientation. In battery holder 2 illustrated in Figs. 2 to 4, the plurality of secondary battery cells 1 are disposed in orientations parallel to each other such that end surfaces of secondary battery cells 1 on each side in a length direction of secondary battery cells 1 are positioned on the same plane. Battery holder 2 illustrated in the drawing includes the plurality of holding tubular parts 21 that house the plurality of respective secondary battery cells 1 inside and hold the plurality of respective secondary battery cells 1 in orientations parallel to each other, and heat capacity part 4 that is coupled to the outer sides of holding tubular parts 21 and absorbs heat of secondary battery cells 1 conducted from holding tubular parts 21. Battery holder 2 is made of resin, and is formed by integrally molding the plurality of holding tubular parts 21 and integrally molding heat capacity part 4 with holding tubular parts 21. As the resin for molding the battery holder 2, a material excellent in thermal conductivity, insulation, and heat resistance is preferably used, and for example, polycarbonate, ABS, or the like can be used.

### (Holding tubular parts 21)

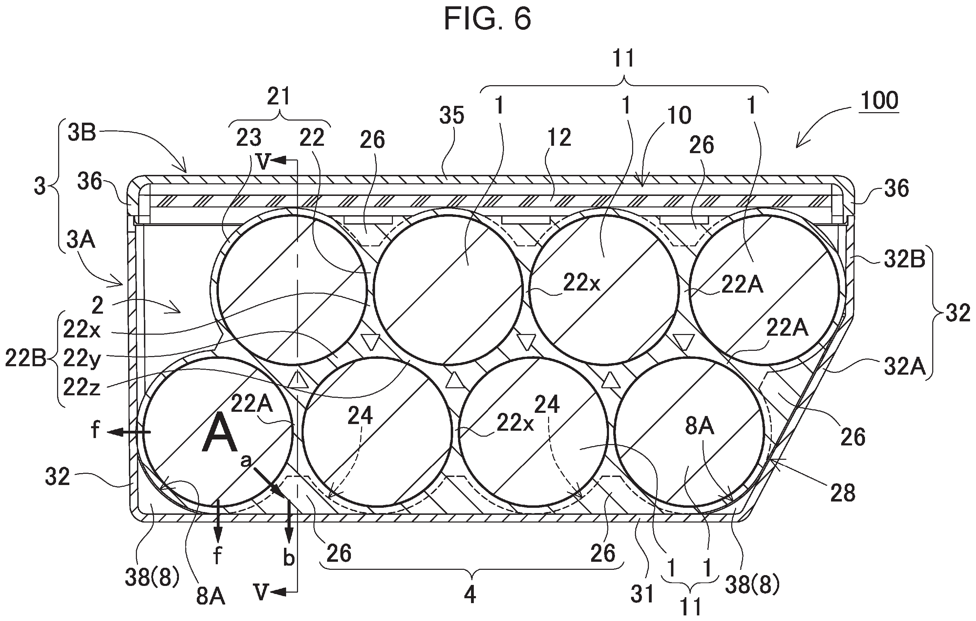

As illustrated in Figs. 3 and 4, battery holder 2 has a structure in which the plurality of holding tubular parts 21 housing the respective secondary battery cells 1 inside are integrally connected. Each holding tubular part 21 has a tubular shape with an inner shape along the outer shape of secondary battery cell 1, and has battery storage portion 20 formed inside to house secondary battery cell 1. As illustrated in Figs. 6 to 9, the plurality of holding tubular parts 21 are integrally connected to form partition wall parts 22 at boundary portions between secondary battery cells 1 adjacent to each other. Further, in an outer peripheral region where adjacent secondary battery cells 1 are not present, the outer surface of battery holder 2 is formed, and outer peripheral wall part 23 having a shape along the outer periphery of secondary battery cells 1 is formed.

In battery holder 2, the plurality of holding tubular parts 21 are integrally molded so that the plurality of secondary battery cells 1 can be stored in one tier or a plurality of tiers in an orientation in which the plurality of secondary battery cells 1 are arranged in a diameter direction (lateral direction in Figs. 6 to 9). In battery holder 2 in which the plurality of secondary battery cells 1 arranged in the lateral direction are stacked and stored in the plurality of tiers, the plurality of holding tubular parts 21 are molded in a staggered stacking arrangement so that secondary battery cells 1 arranged in the vertical direction can be stored in a staggered stacking orientation (staggered arrangement) in which secondary battery cells 1 are arranged vertically at valleys formed between secondary battery cells 1 arranged in the lateral direction. Battery holder 2 illustrated in the drawing has an arrangement in which four secondary battery cells 1 are linearly arranged in the lateral direction to constitute battery row 11, and two battery rows 11 are stacked in two tiers, and eight secondary battery cells 1 are housed in a staggered stacking arrangement in which secondary battery cells 1 constituting one of battery rows 11 are positioned at valleys formed between secondary battery cells 1 constituting the other of battery rows 11. In battery holder 2 illustrated in the drawing, eight holding tubular parts 21 are integrally connected so as to have a substantially parallelogram shape in transverse sectional view.

As illustrated in Fig. 9, in secondary battery cells 1 arranged in the diameter direction (lateral direction in the drawing) in battery rows 11 stacked in a plurality of tiers, a secondary battery cell 1 arranged at a position where the number of adjacent secondary battery cells 1 is the smallest is target battery cell A that is likely to cause fire spreading at the time of abnormality. In the example illustrated in Fig. 9, secondary battery cell 1 positioned at the leftmost position in battery row 11 in the lower tier and secondary battery cell 1 positioned at the rightmost position in battery row 11 in the upper tier are target battery cells A where the number of adjacent secondary battery cells 1 is the smallest and is two. In the drawing, the number of secondary battery cells 1 adjacent to vertically adjacent battery cell C arranged in a vertical diagonal direction with respect to target battery cell A and adjacent to target battery cell A is three, and the number of secondary battery cells 1 adjacent to laterally adjacent battery cell B adjacent to target battery cell A in the lateral direction and the number of secondary battery cells 1 adjacent to intermediate battery cell D adjacent to laterally adjacent battery cell B are four. Therefore, in this arrangement, regarding laterally adjacent battery cell B, vertically adjacent battery cell C, and intermediate battery cell D where the number of secondary battery cells 1 adjacent to each other is 3 to 4, even if an abnormality occurs, the number of adjacent secondary battery cells 1 is large, and thus the heat capacity of adjacent secondary battery cells 1 is large, and fire spreading is suppressed as secondary battery cells 1 absorb heat. On the other hand, regarding target battery cell A where the number of adjacent secondary battery cells 1 is two and is the smallest, the number of adjacent secondary battery cells 1 is small and the heat capacity of secondary battery cells 1 is also small, and thus target secondary battery cell 1 is most likely to cause fire spreading. Therefore, in battery pack 100 according to the present disclosure, secondary battery cell 1 disposed at a position where the number of adjacent secondary battery cells 1 is the smallest is set as target battery cell A, and the thickness of partition wall part 22 formed between secondary battery cell 1 adjacent to target battery cell A and target battery cell A is made large, so that heat conduction from target battery cell A to adjacent secondary battery cell 1 is suppressed.

Partition wall parts 22 of battery holder 2 illustrated in the drawing include target partition wall part 22A formed between secondary battery cells 1 (laterally adjacent battery cell B and vertically adjacent battery cell C) adjacent to target battery cell A and target battery cell A, and non-target partition wall parts 22B formed between secondary battery cells 1 (laterally adjacent battery cell B, vertically adjacent battery cell C, and intermediate battery cell D) excluding target battery cell A, and the thickness (T1) of target partition wall part 22A is greater than an average value (Ta) of thicknesses of all partition wall parts 22 to suppress heat conduction with adjacent secondary battery cells 1. As described above, by increasing the thickness (T1) of target partition wall part 22A disposed between target battery cell A disposed at a position where fire spreading is most likely to occur at the time of heat generation and adjacent secondary battery cells 1, even when an abnormality occurs in target battery cell A, a sufficient interval can be provided between target battery cell A and adjacent secondary battery cells 1 due to thick target partition wall part 22A, and heat conduction from target battery cell A to adjacent secondary battery cells 1 can be suppressed to effectively prevent fire spreading. In particular, by setting the thickness (T1) of target partition wall part 22A to be greater than the average value (Ta) of the thicknesses of all partition wall parts 22, heat conduction can be reliably suppressed as compared with non-target partition wall parts 22B, and fire spreading can be effectively prevented. In battery pack 100 in which the radius (R) of each secondary battery cell 1 is 9 mm, the ratio of the thickness (T1) of target partition wall part 22A to the radius (R) of each secondary battery cell 1 can be greater than or equal to 16%, and for example, the thickness (T1) of target partition wall part 22A can be greater than or equal to 1.44 mm, preferably greater than or equal to 1.5 mm. When the thickness (T1) of target partition wall part 22A is specified based on the ratio to the radius (R) of each secondary battery cell 1, it is also preferable to change the ratio based on the radius (R) of each secondary battery cell 1. In battery pack 100 in which the radius (R) of each secondary battery cell 1 is 11 mm, the ratio of the thickness (T1) of target partition wall part 22A to the radius (R) of each secondary battery cell 1 can be greater than or equal to 13.5%, and for example, the thickness (T1) of target partition wall part 22A can be greater than or equal to 1.485 mm, preferably greater than or equal to 1.5 mm. Therefore, in battery pack in which the radius (R) of each secondary battery cell 1 is in a range of 9 mm to 11 mm, battery holder 2 can effectively suppress heat conduction with adjacent secondary battery cells 1 by setting the thickness (T1) of target partition wall part 22A disposed in battery holder 2 to be greater than or equal to 1.5 mm.

Furthermore, in battery pack 100 according to the present disclosure, target partition wall part 22A between target battery cell A and secondary battery cells 1 adjacent to target battery cell A is thickened to widen intervals between target battery cell A and secondary battery cells 1, thereby preventing fire spreading. In addition, the thicknesses of non-target partition wall parts 22B are reduced, thereby making it possible to suppress an increase in the outer shape of the battery holder. For example, among non-target partition wall parts 22B, non-target partition wall part 22B having the minimum thickness can be set as specific partition wall part 22x, and the thickness (T2) of specific partition wall part 22x can be less than or equal to the average value (Tb) of the thicknesses of all non-target partition wall parts 22B. As described above, in the structure in which non-target partition wall parts 22B formed between secondary battery cells 1 excluding target battery cell A are thinned, and in particular, the thickness (T2) of specific partition wall part 22x having the minimum thickness is less than the average value (Tb) of the thicknesses of all non-target partition wall parts 22B, heat conduction between secondary battery cells 1 adjacent via specific partition wall part 22x is promoted while an increase in the outer shape of battery holder 2 is suppressed, and fire spreading is suppressed due to the heat capacity of secondary battery cells 1. In battery pack 100 in which the radius (R) of each secondary battery cell 1 is 9 mm, the ratio of the thickness (T2) of specific partition wall part 22x to the radius (R) of each secondary battery cell 1 can be less than or equal to 12%, and for example, the thickness (T2) of specific partition wall part 22x can be less than or equal to 1.08 mm, preferably less than or equal to 1.05 mm. When the thickness (T2) of specific partition wall part 22x is specified based on the ratio to the radius (R) of each secondary battery cell 1, it is also preferable to change the ratio based on the radius (R) of each secondary battery cell 1. In battery pack 100 in which the radius (R) of each secondary battery cell 1 is 11 mm, the ratio of the thickness (T2) of specific partition wall part 22x to the radius (R) of each secondary battery cell 1 can be set to be less than or equal to 10%, and for example, the thickness (T2) of specific partition wall part 22x can be set to be less than or equal to 1.1 mm, preferably less than or equal to 1.05 mm. Therefore, in a battery pack in which the radius (R) of each secondary battery cell 1 is in a range from 9 mm to 11 mm, in battery holder 2, by setting the thickness (T2) of specific partition wall part 22x disposed in battery holder 2 to be less than or equal to 1.1 mm, heat conduction between asymmetric battery cells adjacent via the specific partition wall part is promoted, and fire spreading can be suppressed due to the heat capacity of the secondary battery cells.

Furthermore, the difference (T1 - T2) between the thickness (T1) of target partition wall part 22A and the thickness (T2) of specific partition wall part 22x can be greater than or equal to 3.5% of the radius (R) of each secondary battery cell 1, and preferably 4% to 7% of the radius (R) of each secondary battery cell 1. As described above, by specifying the difference (T1 - T2) between the thickness (T1) of the target partition wall part and the thickness (T2) of the specific partition wall part based on the ratio to the radius (R) of each of the secondary battery cells, heat conduction to secondary battery cell 1 facing the target battery cell is suppressed according to the outer diameter of each secondary battery cell 1, and heat conduction with an asymmetric battery cell adjacent via the specific partition wall part 22x is promoted, so that heat capacity can be effectively utilized.

Further, in battery row 11 in which the plurality of secondary battery cells 1 are arranged in the diameter direction, non-target partition wall part 22B formed between secondary battery cells 1 excluding target battery cell A can be specific partition wall part 22x. For example, in the battery pack illustrated in Fig. 9, among the plurality of secondary battery cells 1 constituting each battery row 11, while the thickness (T1) of target partition wall part 22A formed between target battery cell A and laterally adjacent battery cell B is increased, each of non-target partition wall part 22B formed between laterally adjacent battery cell B and intermediate battery cell D and non-target partition wall part 22B formed between intermediate battery cell D and vertically adjacent battery cell C can be used as specific partition wall part 22x, and the thickness (T2) can be reduced. According to this structure, by offsetting the thickness (T1) of target partition wall part 22A and the thickness (T2) of specific partition wall part 22x against each other between secondary battery cells 1 constituting same battery row 11, it is possible to effectively prevent an increase in the overall length of battery row 11, and thus, it is possible to prevent an increase in the outer shape of battery holder 2.

Further, as illustrated in Fig. 9, in the structure in which the plurality of battery rows 11 are vertically stacked, target partition wall part 22A disposed between target battery cell A and vertically adjacent battery cell C arranged in the vertical diagonal direction is thickened to widen the interval between the target battery cell A and the vertically adjacent battery cell C. In this case, in order to prevent the overall length of battery holder 2 from becoming longer, battery rows 11 arranged vertically are uniquely disposed. In order to make it easy to understand the features of the arrangement of the battery rows 11 arranged vertically in battery holder 2 illustrated in Fig. 9, first, the arrangement of secondary battery cells 91 in battery holder 92 according to comparative example 1 will be described.

### (Comparative example 1)

Fig. 12 is a cross-sectional view of battery holder 92 according to comparative example 1 that houses eight secondary battery cells 91. In battery holder 92 illustrated in this drawing, four secondary battery cells 91 having an outer diameter of 18 mm are arranged side by side in the lateral direction, and secondary battery cells 91 are stacked and arranged in two upper and lower tiers in a staggered stacking orientation. In battery holder 92 in the drawing, a plurality of holding tubular parts 81 holding the plurality of secondary battery cells 91 in orientations parallel to each other are integrally molded, and the thicknesses of partition wall parts 82 formed between secondary battery cells 91 are uniformly 1.2 mm, and the thickness of outer peripheral wall part 83 is uniformly 1.0 mm. Among eight secondary battery cells 91 housed in battery holder 92, secondary battery cell 91 positioned on the leftmost side of battery row 90 in the lower tier and secondary battery cell 91 positioned on the rightmost side of battery row 90 in the upper tier are target battery cells A where the number of adjacent secondary battery cells 91 is the smallest (two in the drawing).

In battery holder 92, an interval between vertical tangent S1 drawn on outer peripheral wall part 83 covering the left side of target battery cell A positioned on the leftmost side of battery row 90 in the lower tier and vertical tangent S2 drawn on outer peripheral wall part 83 on the right side of target battery cell A positioned on the rightmost side of battery row 90 in the upper tier is a total length (L) of battery holder 92 in a longitudinal direction of battery holder 92. In this drawing, the total length (L) is 87.2 mm. A case is considered where, from this state, intervals between target battery cells A and laterally adjacent battery cells B are increased to 1.6 mm, and intervals between target battery cells A and vertically adjacent battery cells C are increased to 1.6 mm. In this case, when the intervals between the target battery cells A and vertically adjacent battery cells C are widened to 1.6 m in a state where angles θ formed by center lines N connecting the centers of target battery cells A and the centers of vertically adjacent battery cells C and center lines M1 and M2 of battery rows 90 are maintained at 60 degrees, that is, when battery rows 90 in the upper and lower tiers are moved by 0.4 mm in the vertical diagonal direction at 60 degrees, the outer shape of battery holder 92 is increased by 0.6 mm in the lateral direction and by 0.35 mm in the vertical direction. That is, in a state where target battery cells A are moved by 0.4 mm in the lateral direction with respect to laterally adjacent battery cells B, the total length of each battery row 90 increases by 0.4 mm. In a state where target battery cells A are moved by 0.4 mm in the vertical diagonal direction at 60 degrees with respect to vertically adjacent battery cells C, lateral positions of battery rows in the upper and lower tiers expand by 0.2 mm, and the total length of battery holder 92 increases by 0.6 mm as a whole.

In order to solve such a problem, in battery holder 2 illustrated in Fig. 9, in order to prevent the total length (L) from becoming long, the thicknesses of partition wall parts 22 are adjusted by moving only laterally adjacent battery cells B and intermediate battery cells D without changing the positions of target battery cells A, which are secondary battery cells 1 positioned at both left and right ends, and the positions of vertically adjacent battery cells C in each battery row 11. That is, in Fig. 9 with respect to Fig. 12, in each battery row 11 in the upper and lower tiers, intermediate battery cell D is brought close to vertically adjacent battery cell C by 0.2 mm in the lateral direction, and laterally adjacent battery cell B is moved away from target battery cell A by 0.4 mm in the lateral direction. As a result, the intervals between target battery cells A and laterally adjacent battery cells B are 1.6 mm, intervals between laterally adjacent battery cells B and intermediate battery cell D and intervals between intermediate battery cell D and vertically adjacent battery cells C are 1.0 mm, and the intervals between target battery cells A and laterally adjacent battery cells B can be increased by 0.4 mm without changing the total length of each battery row 11.

Regarding vertically arranged secondary battery cells 1, when the intervals between the target battery cells A arranged in the vertical diagonal direction with respect to vertically adjacent battery cells C and vertically adjacent battery cells C are widened by 0.4 mm in the vertical diagonal direction at 60 degrees, the positional relationship of vertically arranged battery rows 11 moves by 0.2 mm in the lateral direction and 0.35 mm in the vertical direction, and the outer shape of entire battery holder 2 becomes large. Here, the following can be said about the outer shape of battery pack 100. The size of battery pack 100 in the vertical direction depends not only on the size of battery holder 2 in the vertical direction, but also on circuit substrate 12 stacked on battery holder 2, a battery component mounted on circuit substrate 12, the shape of exterior case 3, the coupling structure, and the like. Therefore, even if the outer shape of battery holder 2 in the vertical direction becomes slightly larger, the effect on the change in the outer shape of entire battery pack 100 is minor. On the other hand, the size of battery pack 100 in the lateral direction, that is, the total length is determined by the size of battery holder 2 in the lateral direction. Therefore, reducing the total length (L) of battery holder 2 is extremely important in reducing the outer shape of battery pack 100.

Therefore, in battery holder 2 illustrated in Fig. 9, in order to prevent the total length (L) from becoming long, the intervals between target battery cells A and vertically adjacent battery cells C are increased by 0.4 mm by vertical movement from the state illustrated in Fig. 12 without moving vertically arranged battery rows 11 in the vertical diagonal direction at 60 degrees. For example, in battery holder 92, illustrated in Fig. 12, in which the thicknesses of all partition wall parts 82 are 1.2 mm, the distance (D) between center line M1 passing through the center of battery row 90 in the lower tier and center line M2 passing through the center of battery row 90 in the upper tier is 16.6 mm. On the other hand, in battery holder 2 illustrated in Fig. 9, an interval between battery row 11 in the lower tier and battery row 11 in the upper tier is increased by 0.5 mm in the vertical direction such that the distance (D) between center line M1 and center line M2 is 17.1 mm. As a result, the intervals between target battery cells A and vertically adjacent battery cells C arranged in the vertical diagonal direction with respect to target battery cells A can be increased by 0.4 mm. In battery holder 2 having this structure, as compared with battery holder 92 illustrated in Fig. 12, the intervals between target battery cells A and adjacent secondary battery cells 1 (laterally adjacent battery cells B and vertically adjacent battery cells C) can be increased without an increase in the total length (L) in the lateral direction.

In order to implement the above structure, in battery holder 2 illustrated in Fig. 9, angles θ formed by center lines N connecting the centers of target battery cells A and vertically adjacent battery cells C arranged in the vertical diagonal direction with respect to target battery cells A and adjacent to target battery cells A and center lines M1 and M2 of battery rows 11 are greater than 60 degrees. In particular, in battery holder 2 illustrated in Fig. 9, positional offset between battery row 11 in the lower tier and battery row 11 in the upper tier in lateral direction is less than or equal to the radius (R) of each secondary battery cell 1. Specifically, in battery holder 2 illustrated in Fig. 9, an interval between vertical tangent S3 drawn on outer peripheral wall part 23 covering the right side of vertically adjacent battery cell C positioned on the rightmost side of battery row 11 in the lower tier and vertical tangent S2 drawn on the outer peripheral wall part 23 covering the right side of target battery cell A positioned on the rightmost side of battery row 11 in the upper tier is less than or equal to the radius of each secondary battery cell 1. In other words, vertical line S4 drawn from the center of target battery cell A positioned on the rightmost side of battery row 11 in the upper tier to center line M1 of battery row 11 in the lower tier comes into contact with or intersects with vertically adjacent battery cell C positioned on the rightmost side of battery row 11 in the lower tier. According to the above structure, it is possible to implement an advantage that the overall length (L) of battery holder 2 can be prevented from increasing while intervals between secondary battery cells 1 housed in the battery holder are set to an optimum interval for preventing fire spreading.

Further, in battery holder 2 illustrated in Fig. 9, intervals between laterally adjacent battery cells B and vertically adjacent battery cells C arranged in a vertical diagonal direction with respect to laterally adjacent battery cells B, and intervals between intermediate battery cells D arranged in a vertical diagonal direction are 1.8 mm, and intervals between laterally adjacent battery cells B and intermediate battery cells D arranged in a vertical diagonal direction with respect to laterally adjacent battery cells B are 1.3 mm. Therefore, suppression partition wall part 22y having a thickness (T3) of 1.8 mm is formed between laterally adjacent battery cells B and vertically adjacent battery cells C arranged in a vertical diagonal direction with respect to laterally adjacent battery cells B and between intermediate battery cells D arranged in a vertical diagonal direction, and intermediate partition wall part 22z having a thickness (T4) of 1.3 mm is formed between laterally adjacent battery cells B and intermediate battery cells D arranged in a vertical diagonal direction with respect to laterally adjacent battery cells B.

As described above, in battery holder 2 in which angles θ formed by center lines N connecting the centers of target battery cells A and vertically adjacent battery cells C arranged in a vertical diagonal direction with respect to target battery cells A and adjacent to target battery cells A and center lines M1 and M2 of battery rows 11 are greater than 60 degrees, the thickness (T3) of suppression partition wall part 22y formed between laterally adjacent battery cells B and adjacent battery cells C arranged in a vertical diagonal direction with respect to laterally adjacent battery cells B can be greater than the thickness (T1) of target partition wall part 22A. This structure has an advantage that intervals between laterally adjacent battery cells B and vertically adjacent battery cells C heated by target battery cells A when target battery cells A generate heat can be increased, and the occurrence of fire spreading due to interference between laterally adjacent battery cells B and vertically adjacent battery cells C can be suppressed. Specific partition wall part 22x is disposed between laterally adjacent battery cells B heated at the time of heat generation of target battery cells A and intermediate battery cells D adjacent to laterally adjacent battery cells B in the lateral direction and between vertically adjacent battery cells C heated at the time of heat generation of target battery cells A and intermediate battery cells D adjacent to vertically adjacent battery cells C in the lateral direction to narrow the intervals, so that heat conduction is effectively performed from laterally adjacent battery cells B to intermediate battery cells D and from vertically adjacent battery cells C to intermediate battery cells D, whereby fire spreading is suppressed by the heat capacity of intermediate battery cells D.

### (Holder tubular part 2A and holder lid parts 2B)

Battery holder 2 illustrated in Figs. 3 to 5 includes three members including holder tubular part 2A that holds intermediate portions of secondary battery cells 1 in the length direction of secondary battery cells 1, and a pair of holder lid parts 2B that is coupled to both end parts of holder tubular part 2A and holds both end parts of each secondary battery cell 1. As illustrated in Figs. 4 and 5, holder tubular part 2A is integrally connected such that the plurality of holding tubular parts 21 are arranged in a predetermined arrangement. Both ends of holder tubular part 2A including the plurality of holding tubular parts 21 are opened, and opening end surfaces are closed by the pair of holder lid parts 2B. In holder tubular part 2A, when each battery storage portion 20, which is an internal space of a corresponding one of holding tubular parts 21, is molded with a mold, a draft angle is provided so that the inner shape gradually increases from the central portion toward the opening edge, whereby the inner shape of the central portion becomes smallest. As a result, secondary battery cells 1 housed in holding tubular parts 21 are held in a state where the central portions are in closest contact with inner surfaces of the holding tubular parts 21. Normally, since secondary battery cells 1 are most likely to expand and generate heat at the central portions, the structure in which the portions are brought into close contact with the inner surfaces of holding tubular parts 21 has an advantage that heat of secondary battery cells 1 can be efficiently conducted to holding tubular parts 21.

As illustrated in Figs. 3 to 5, each holder lid part 2B has a shape of an opposing surface corresponding to a shape of an end portion of the holder tubular part 2A, and has a structure of holding end portions of secondary battery cells 1 protruding from the opening of holder tubular part 2A while covering the end portions. In the example illustrated in Fig. 5, each holder lid part 2B includes cylindrical holding portion 41 that holds end portions of secondary battery cells 1, and has a structure in which the end portions of secondary battery cells 1 are held by holding portion 41, and holding portion 41 is inserted inside the opening edge portion of holder tubular part 2A to hold the end portions of secondary battery cells 1 at fixed positions. Further, holder lid parts 2B open electrode window 42 through which end surface electrodes of secondary battery cells 1 are exposed, and lead plates 13 are connected to first end surface 1A and second end surface 1B exposed through electrode window 42 to connect the plurality of secondary battery cells 1 in series and in parallel.

However, although not illustrated, the battery holder including the plurality of holding tubular parts can be configured by two divided holders at the intermediate portion. In this battery holder, the end portions of the secondary battery cells are inserted from the opening portions of the two divided holders, and the secondary battery cells are housed in a state where the secondary battery cells are sandwiched by the divided holders from both sides.

### (Heat capacity part 4)

Further, in battery holder 2 illustrated in the drawing, in order to effectively absorb heat of stored secondary battery cells 1 and dissipate the heat, heat capacity part 4 that absorbs the heat of secondary battery cells 1 conducted from holding tubular parts 21 is disposed on outer sides of holding tubular parts 21. This structure has an advantage that fire spreading can be more effectively prevented by a synergistic effect with controlling heat conduction by adjusting the thicknesses of partition wall parts 22. As illustrated in Figs. 3 to 7, heat capacity part 4 is integrally molded with holding tubular parts 21, and has a heat capacity to absorb heat of secondary battery cells 1 conducted through holding tubular parts 21. Heat capacity part 4 is positioned in valley portion 24 formed between adjacent holding tubular parts 21 so as to effectively absorb heat conducted from holding tubular parts 21, and is integrally molded across holding tubular parts 21. As described above, in the structure in which heat capacity part 4 is disposed in valley portion 24 of adjacent holding tubular parts 21, heat capacity part 4 can be disposed by effectively utilizing a dead space of battery holder 2. In particular, due to molding across adjacent holding tubular parts 21, there is an advantage that even when secondary battery cell 1 housed in any of holding tubular parts 21 generates heat, the heat can be reliably conducted to heat capacity part 4 and absorbed by heat capacity part 4. Heat capacity part 4 disposed in valley portion 24 of adjacent holding tubular parts 21 can increase in heat capacity and effectively absorb heat conducted from holding tubular parts 21 when the volume of heat capacity part 4 is increased. However, heat capacity part 4 having a large volume has a problem that a sink mark occurs during resin molding when heat capacity part 4 has a massive shape. In order to solve such a problem, in battery holder 2 illustrated in the drawing, sink mark prevention recesses 25 for preventing a sink mark during molding of heat capacity part 4 is disposed adjacent to heat capacity part 4. Sink mark prevention recesses 25 are also used as fitting recesses 5 into which heat conduction protrusions 7 of exterior case 3 described later are fitted.

### (Connecting ribs 26 and groove portions 27)

Heat capacity part 4 illustrated in Figs. 3 to 10 includes a plurality of connecting ribs 26 that connect holding tubular parts 21 adjacent to each other. The plurality of connecting ribs 26 are arranged in a plurality of rows in orientations parallel to each other at predetermined intervals along an extending direction of valley portion 24 of adjacent holding tubular parts 21. In battery holder 2, heat capacity part 4 formed in valley portion 24 is divided into a plurality of rows, so that a gap is disposed between adjacent heat capacity parts 4 to provide sink mark prevention recesses 25. Each of the connecting ribs has a predetermined thickness, and the connecting ribs are integrally connected to holding tubular parts 21 along valley portion 24 having a substantially V shape in sectional view and formed between holding tubular parts 21 adjacent to each other. Connecting ribs 26 having this structure also function as reinforcing ribs that reinforce adjacent holding tubular parts 21. In this manner, the structure in which adjacent holding tubular parts 21 are connected to each other by the plurality of connecting ribs 26 to reinforce the holding tubular parts can increase the rigidity of battery holder 2 and improve the resistance to impact such as dropping. As illustrated in Fig. 10, the thickness (t) of each connecting rib 26 is a thickness capable of maintaining sufficient strength while securing heat capacity, and is, for example, greater than or equal to 3 mm, preferably greater than or equal to 4 mm. The thickness (t) of each connecting rib 26 is a thickness capable of preventing occurrence of a sink mark during resin molding, and is, for example, less than or equal to 10 mm, preferably less than or equal to 8 mm.

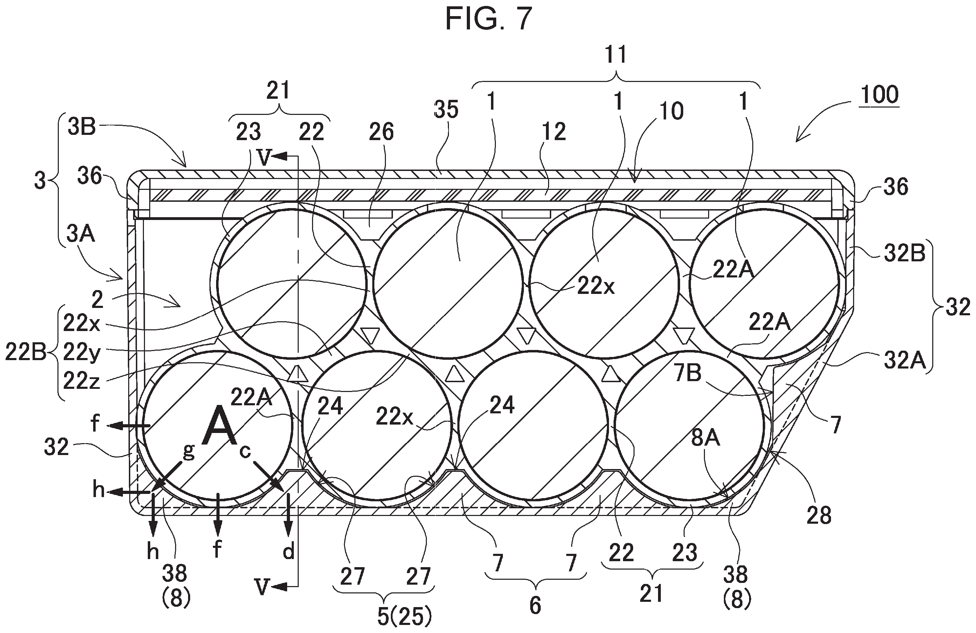

In heat capacity part 4 including the plurality of connecting ribs 26, groove portions 27 having a predetermined groove width (m) are formed between connecting ribs 26 adjacent to each other, and groove portions 27 are used as sink mark prevention recesses 25. Groove portions 27 formed in valley portion 24 are formed so as to have a depth reaching a bottom portion of valley portion 24, and by increasing the depth and width of a facing surface between sink mark prevention recesses 25 and connecting ribs 26, adjacent connecting ribs 26 are divided in a wider range to reliably prevent a sink mark during molding of heat capacity part 4. In addition, when groove portions 27 are formed to be deep and wide, and heat conduction protrusions 7 are fitted into groove portions 27 as fitting recesses 5, groove portions 27 can be reliably coupled to heat conduction protrusions 7 in a larger area while being in a thermally coupled state. Further, as illustrated in Fig. 8, groove portions 27 partially expose the outer peripheral surface of holding tubular parts 21, and as illustrated in Fig. 7, in a state where heat conduction protrusions 7 of exterior case 3 are guided to groove portions 27, heat conduction protrusions 7 are brought close to or into close contact with holding tubular parts 21 and thermally coupled.

Battery holder 2 illustrated in Figs. 3, 4, and 6 to 8 has a shape in which a plurality of holding tubular parts 21 are stacked in two tiers so as to have a staggered stacking shape, and the plurality of holding tubular parts 21 are connected so as to have a substantially parallelogram shape in transverse cross section. In battery holder 2 having this shape, connecting ribs 26 arranged in a plurality of rows are provided as heat capacity part 4 in valley portion 24 formed in a plurality of rows on a lower surface, and groove portions 27 are disposed between connecting ribs 26 adjacent to each other to form sink mark prevention recesses 25. Sink mark prevention recesses 25 are fitting recesses 5 to which the plurality of heat conduction protrusions 7 disposed so as to protrude from the bottom surface of exterior case 3 in which battery holder 2 is housed are guided. Further, in battery holder 2 illustrated in Figs. 6 and 7, a side surface (right side surface in Figs. 6 and 7) that is a side surface of battery holder 2 formed by holding tubular parts 21 stacked vertically and is inclined in an undercut shape of battery holder 2 to which the plurality of holding tubular parts 21 are connected so as to have a substantially parallelogram shape in transverse sectional view is defined as undercut face 28, and heat capacity part 4 and sink mark prevention recesses 25 are also formed on undercut face 28. Sink mark prevention recesses 25 disposed in undercut face 28 serve as fitting recesses 5 to which the plurality of heat conduction protrusions 7 disposed so as to protrude from an inclined side surface of exterior case 3 are guided. Further, in battery holder 2 illustrated in Figs. 3, 6, and 7, connecting ribs 26 arranged in the plurality of rows are disposed as heat capacity part 4 also in valley portion 24 formed in the plurality of rows on the upper surface of battery holder 2, and groove portions 27 are disposed between connecting ribs 26 adjacent to each other to form sink mark prevention recesses 25. Groove portions 27 formed on the upper surface function as sink mark prevention recesses 25 without being also used as fitting recesses 5 since heat conduction protrusion 7 facing a groove portions is not present. In this structure, since heat capacity part 4 is disposed also on the upper surface, it is possible to improve rigidity by using connecting ribs 26 as reinforcing ribs while absorbing heat of secondary battery cells 1 arranged in the upper tier. Particularly, since heat capacity part 4 is divided into the plurality of connecting ribs 26 and groove portions 27 are disposed between the connecting ribs, it is possible to increase a surface area of heat capacity part 4 and improve heat dissipation characteristics.

In battery holder 2 described above, a large number of connecting ribs 26 serving as heat capacity part 4 are formed on an outer peripheral surface of holder tubular part 2A. The structure in which heat capacity part 4 is disposed in holder tubular part 2A as described above has an advantage that heat can be effectively absorbed and dissipated in the vicinity of central portions of secondary battery cells 1 where heat is likely to be generated. In particular, heat of secondary battery cells 1 can be more effectively dissipated to the outside by thermally coupling heat conduction protrusions 7 disposed in exterior case 3 using groove portions 27 formed in holder tubular part 2A as fitting recesses 5. Further, in battery holder 2 illustrated in the drawing, holder lid parts 2B are also provided with connecting ribs 26 as heat capacity part 4. Although connecting ribs 26 formed on holder lid parts 2B are not thermally coupled to heat conduction protrusions 7 disposed on exterior case 3, the strength can be increased by reinforcing holder lid parts 2B, and heat conducted from holder lid parts 2B can be effectively dissipated by increasing the surface area. However, a fitting recess may be disposed adjacent to the connecting ribs formed on the holder lid parts, and heat conduction protrusions fitted in the fitting recess may be disposed in the exterior case. With this structure, heat of the holder lid parts can be effectively conducted to the exterior case and dissipated.

As described above, heat capacity part 4 formed in battery holder 2 is divided into the plurality of connecting ribs 26, and groove portions 27 are disposed between adjacent connecting ribs 26, so that a sink mark can be prevented during resin molding. However, the volume of heat capacity part 4 is reduced and the heat capacity is reduced. In order to solve this problem, battery pack 100 illustrated in the drawing is provided with coupling heat capacity part 6 thermally coupled to battery holder 2 on the inner surface side of exterior case 3.

### (Exterior case 3)

As illustrated in Figs. 1 to 6, exterior case 3 has a box-like outer shape and a hollow inside to house battery assembly 10. Exterior case 3 illustrated in the drawing is made of resin, and includes main body case 3A having a box shape with an upper opening, and lid case 3B that closes the upper opening of main body case 3A. Main body case 3A includes bottom plate portion 31 facing a lower surface of battery holder 2, side plate portion 32 coupled to both sides of bottom plate portion 31 and facing the side surface of battery holder 2, and end surface plate portion 33 coupled to both ends of bottom plate portion 31 and side surface plate portion 32 and facing an end surface of battery holder 2. Lid case 3B includes top plate portion 35 and peripheral wall part 36 disposed along an outer peripheral edge of top plate portion 35 and having a low height. In exterior case 3, an opening edge of main body case 3A and a tip edge of peripheral wall part 36 of lid case 3B are coupled to each other while facing each other. The upper opening of main body case 3A is closed by lid case 3B while battery assembly 10 is housed in exterior case 3, and battery holder 2 is housed in exterior case 3.

### (Coupling heat capacity part 6)

Exterior case 3 has, on its inner surface, coupling heat capacity part 6 that is thermally coupled to battery holder 2 housed inside and absorbs heat conducted from battery holder 2. As illustrated in Figs. 3 to 10, coupling heat capacity part 6 is integrally molded with exterior case 3, and has a heat capacity for absorbing heat of secondary battery cells 1 conducted from battery holder 2. Coupling heat capacity part 6 includes the plurality of heat conduction protrusions 7 protruding from the inner surface of exterior case 3. Coupling heat capacity part 6 integrally molded with exterior case 3 is divided into the plurality of heat conduction protrusions 7 to provide gaps 34 between adjacent heat conduction protrusions 7, thereby preventing occurrence of a sink mark during resin molding of coupling heat capacity part 6. The plurality of divided heat conduction protrusions 7 are fitted into fitting recesses 5 formed in battery holder 2 and thermally coupled to battery holder 2 so that heat conducted from battery holder 2 can be effectively absorbed.

In exterior case 3 illustrated in the drawing, a plurality of heat conduction protrusions 7 are provided on an inner surface of main body case 3A, that is, an inner surface of bottom plate portion 31 facing the lower surface of battery holder 2 housed in main body case 3A, and an inner surface of side surface plate portion 32 facing undercut face 28 of battery holder 2 to form coupling heat capacity part 6. The plurality of heat conduction protrusions 7 formed on bottom plate portion 31 are disposed in a region facing valley portion 24 between the plurality of holding tubular parts 21 arranged on the lower surface side of battery holder 2 and at positions facing the plurality of fitting recesses 5 formed in valley portion 24. The plurality of heat conduction protrusions 7 formed on side surface plate portion 32 are disposed in a region facing valley portion 24 between holding tubular parts 21 arranged vertically on undercut face 28 of battery holder 2, and at positions facing the plurality of fitting recesses 5 formed in the valley portion 24. Exterior case 3 illustrated in the drawing includes inclined part 32A along undercut face 28 and vertical part 32B coupled to an upper end of inclined part 32A in side surface plate portion 32 facing undercut face 28, and the plurality of heat conduction protrusions 7 are disposed in inclined part 32A facing undercut face 28.

### (Heat conduction protrusions 7)

Heat conduction protrusions 7 illustrated in Figs. 3 and 4 are molded in a rib shape to be fitted into fitting recesses 5 which serve as groove portions 27 of battery holder 2. The plurality of heat conduction protrusions 7 formed in the rib shape extend along the extending direction of valley portion 24 opposing the heat conduction protrusions, and are arranged in a plurality of rows in orientations parallel to each other with gaps 34 having a predetermined width. As illustrated in Fig. 10, the thickness (w) of each rib-shaped heat conduction protrusion 7 is a thickness capable of maintaining an upright orientation with sufficient strength while securing heat capacity, and is, for example, greater than or equal to 3 mm, preferably greater than or equal to 4 mm. In addition, the thickness (w) of each heat conduction protrusion 7 is a thickness capable of preventing occurrence of a sink mark during resin molding, and is, for example, less than or equal to 10 mm, preferably less than or equal to 8 mm.

As illustrated in Fig. 10, the thickness (w) of each of the plurality of heat conduction protrusions 7 and width (s) of each of gaps 34 are adjusted such that heat conduction protrusions 7 can be fitted into the plurality of fitting recesses 5 formed along valley portion 24 of battery holder 2. Each of gaps 34 formed between adjacent heat conduction protrusions 7 is an insertion gap for guiding connecting ribs 26 of battery holder 2. The thickness (w) of each heat conduction protrusion 7 and the width (s) of each gap 34 are determined such that heat conduction protrusions 7 are fitted into groove portions 27 formed between connecting ribs 26, and connecting ribs 26 can be fitted into gaps 34 formed between heat conduction protrusions 7 at the same time. The thickness (w) of each heat conduction protrusion 7 is set slightly smaller than or substantially equal to the groove width (m) of each of the groove portions so that each heat conduction protrusion 7 can be reliably thermally coupled while being smoothly inserted into groove portions 27 which are fitting recesses 5. Similarly, each of gaps 34 between adjacent heat conduction protrusions 7 has a width (s) slightly larger than or substantially equal to the thickness (t) of each connecting rib 26 so that connecting ribs 26 of battery holder 2 can be reliably thermally coupled while being smoothly inserted.

Furthermore, each rib-shaped heat conduction protrusion 7 can have a gradient on the surface such that the thickness gradually decreases in the protruding direction. In addition, groove portions 27 of battery holder 2 that are fitting recesses 5 can have a gradient on the inner surface such that the groove width (m) gradually increases toward the opening edge. In this structure, in a state in which heat conduction protrusions 7 are inserted into groove portions 27, heat conduction protrusions 7 can be fitted into groove portions 27 while facing surfaces with gradients are brought close to each other, and in a state in which heat conduction protrusions 7 are fitted into groove portions 27, heat conduction protrusions 7 can be reliably thermally coupled to groove portions 27 while facing surfaces with gradients are brought close to each other. Here, a structure in which groove portions 27 formed between connecting ribs 26 have a gradient on the inner surface such that the groove width (m) gradually increases toward the opening edge is a structure in which each of adjacent connecting ribs 26 has a gradient on the surface such that the thickness (t) gradually decreases from the bottom portion of valley portion 24 toward the opening edge, and a structure in which each rib-shaped heat conduction protrusion 7 has a gradient on the surface such that the thickness gradually decreases toward the protruding direction is a structure in which the width (s) gradually increases from the root side toward the tip side of each of heat conduction protrusions 7 in gaps 34 formed between heat conduction protrusions 7. Therefore, even in a state where each connecting rib 26 is inserted into gap 34 between adjacent heat conduction protrusions 7, it is possible to reliably perform thermal coupling by bringing facing surfaces close to each other in a state where connecting ribs 26 are fitted into gaps 34 while easily and reliably guiding connecting ribs 26.

As described above, in the structure in which the surfaces of heat conduction protrusions 7 and surfaces of groove portions 27 have gradients, heat conduction protrusions 7 can be more effectively fitted into groove portions 27, but for example, only either the surfaces of heat conduction protrusions 7 (or gaps 34) or the surfaces of groove portions 27 (or connecting ribs 26) may have gradients, and the other surfaces may be vertical surfaces without having a gradient. Even in this case, since either the surfaces of heat conduction protrusions 7 or the surfaces of groove portions 27 may have gradients, it is possible to reliably perform thermal coupling while simply and easily fitting heat conduction protrusions 7 into groove portions 27 and fitting connecting ribs 26 into gaps 34. Further, as illustrated in Fig. 10, heat conduction protrusions 7 can be provided with chamfered portion 7a by chamfering boundary portions with side surfaces on both sides of distal end surfaces. Heat conduction protrusions 7 having this structure can be more smoothly fitted into fitting recesses 5.

Further, as illustrated in Fig. 10, the height (H) of each heat conduction protrusion 7 is preferably set to be less than the depth (K) of each groove portion 27 such that the distal end surfaces of heat conduction protrusions 7 are not in contact with a bottom surface of each of the groove portions while heat conduction protrusions 7 are fitted into the groove portions that are the fitting recesses. According to this structure, the distal end surface of each connecting rib 26 can be connected to the inner surface of exterior case 3 in a surface contact state in a state where heat conduction protrusions 7 are inserted into deep portions of fitting recesses 5. As a result, heat conducted from holding tubular parts 21 to connecting ribs 26 can be directly conducted to exterior case 3 and effectively dissipated to the outside.

Rib-shaped heat conduction protrusions 7 fitted in groove portions 27 have a surface shape of a surface facing holding tubular parts 21 along the outer peripheral surface of holding tubular parts 21. Heat conduction protrusions 7 are thermally coupled in a state where heat conduction protrusions 7 are fitted in groove portions 27 such that the facing surfaces on both sides approach or are brought into close contact with outer side surfaces of facing holding tubular parts 21. Each heat conduction protrusion 7 illustrated in the drawing has a mountain shape approximating Mt. Fuji in front view, and has a top surface that is close to or in close contact with partition wall parts 22 of battery holder 2, and both side surfaces that are curved surfaces 7A along the outer peripheral surface of outer peripheral wall part 23 of holding tubular parts 21 are close to or in close contact with holding tubular parts 21. According to this structure, since the outer peripheral surface of holding tubular parts 21 can be thermally coupled directly to heat conduction protrusions 7 of exterior case 3, heat generated by secondary battery cells 1 can be efficiently conducted from holding tubular parts 21 to exterior case 3 and dissipated. Further, in the heat conduction protrusions disposed on inclined part 32A of side surface plate portion 32, facing surfaces positioned on the left side surface in Fig. 8 are vertical surfaces 7B. The structure in which facing surfaces of heat conduction protrusions 7 formed on inclined part 32A are vertical surfaces 7B as described above has an advantage that battery holder 2 can be smoothly housed without contact with holding tubular parts 21 when battery holder 2 is inserted into main body case 3A.

Further, in the fitting structure illustrated in Fig. 10, heat conductive paste 15 is disposed between fitting recesses 5 and heat conduction protrusions 7. This structure can improve the thermal conductivity of fitting recesses 5 and heat conduction protrusions 7 to effectively conduct heat. In particular, even when gaps can be formed between the distal end surfaces of heat conduction protrusions 7 and the bottom surfaces of groove portions 27 by setting the height (H) of each heat conduction protrusion 7 to be less than the depth (K) of each groove portion 27, application of heat conductive paste 15 to the gaps provides an advantage that battery holder 2 and exterior case 3 can be more effectively thermally coupled. As heat conductive paste 15, silicone oil, thermal transfer grease, or the like can be used. In addition, the structure in which heat conductive paste 15 is disposed between fitting recesses 5 and heat conduction protrusions 7 has an advantage that heat conduction protrusions 7 can be more smoothly fitted into fitting recesses 5 in a low resistance state in a process of assembling battery pack 100.

### (Second coupling heat capacity part 8)

Further, exterior case 3 includes second coupling heat capacity part 8 thermally coupled to holding tubular parts 21 of battery holder 2 along a boundary between bottom plate portion 31 and side surface plate portion 32 of main body case 3A. Second coupling heat capacity part 8 includes a plurality of opposed ribs 38 integrally connected across bottom plate portion 31 and side surface plate portion 32. Second coupling heat capacity part 8 illustrated in the drawing is divided into a plurality of opposed ribs 38 to provide a gap between adjacent opposed ribs 38, thereby preventing occurrence of a sink mark during resin molding of second coupling heat capacity part 8. Further, opposed ribs 38 have surfaces that face holding tubular parts 21 and are along the surfaces of holding tubular parts 21. Opposed ribs 38 illustrated in the drawing have arc-shaped curved surfaces 8A along the curved surfaces of holding tubular parts 21 as the shapes of the facing surfaces. In this way, opposed ribs 38 are brought into close contact with holding tubular parts 21 in a surface contact state, whereby heat can be effectively conducted. As described above, the plurality of opposed ribs 38 integrally formed across bottom plate portion 31 and side surface plate portion 32 also have an advantage that rigidity increases at a corner portion of box-shaped main body case 3A and that box-shaped main body case 3A is reinforced.

In battery pack 100 having the above structure, heat capacity part 4 disposed in battery holder 2 and coupling heat capacity part 6 disposed in exterior case 3 are coupled by the fitting structure at a facing portion between the outer peripheral surface of battery holder 2 and the inner surface of exterior case 3, so that it is possible to form a resin lump that cannot be molded by each component alone in each of battery holder 2 and exterior case 3 while effectively utilizing a surplus space between battery holder 2 and exterior case 3, and to efficiently conduct heat of secondary battery cells 1 that have generated the heat from battery holder 2 to exterior case 3 and dissipate the heat. In battery pack 100 described above, the heat transfer when the heat of secondary battery cells 1 that have generated the heat is conducted from battery holder 2 to exterior case 3 and dissipated will be described in detail with reference to Figs. 5 to 7 and Fig. 10. Fig. 5 is a transverse sectional view corresponding to a cross section taken along line V-V in Figs. 6 and 7, and Fig. 10 is an enlarged sectional view of the main part illustrated in Fig. 5.

In these drawings, arrows a to h indicate heat transfer from target battery cell A when target battery cell A positioned at the lower left in Figs. 6 and 7 generates the heat due to an abnormality such as thermal runaway. A part of the heat generated in target battery cell A is conducted from holding tubular parts 21 to connecting ribs 26 which are heat capacity part 4 as indicated by arrow a, and then is conducted from connecting ribs 26 to exterior case 3 and dissipated to the outside as indicated by arrow b. In addition, a part of the heat generated in target battery cell A is conducted from holding tubular parts 21 to heat conduction protrusions 7 which are coupling heat capacity part 6 as indicated by arrow c, and then is conducted from heat conduction protrusions 7 to exterior case 3 and dissipated to the outside as indicated by arrow d. Further, a part of the heat conducted from holding tubular parts 21 to connecting ribs 26 which are heat capacity part 4 as indicated by arrow a is conducted from connecting ribs 26 to heat conduction protrusions 7 as indicated by arrow e (see Fig. 10), and then is conducted from heat conduction protrusions 7 to exterior case 3 and dissipated to the outside as indicated by arrow d. As described above, in the structure in which heat capacity part 4 disposed in battery holder 2 and coupling heat capacity part 6 disposed in the exterior case are thermally coupled by the fitting structure, as illustrated in Fig. 5, the lower surface of battery holder 2 and bottom plate portion 31 of exterior case 3 are thermally coupled in a state of being in close contact with each other without a gap, and heat can be efficiently conducted from battery holder 2 to exterior case 3 and dissipated.

Further, in Figs. 6 and 7, in a portion where holding tubular parts 21 of battery holder 2 are in direct contact with the inner surface of exterior case 3, a part of heat generated in target battery cell A is conducted from holding tubular parts 21 to exterior case 3 and dissipated to the outside as indicated by arrow f. In a portion where holding tubular parts 21 of battery holder 2 are in contact with second coupling heat capacity part 8 disposed at the corner portion of exterior case 3, a part of heat generated in target battery cell A is conducted from holding tubular parts 21 to opposed ribs 38 which are second coupling heat capacity part 8 as indicated by arrow g, and then is conducted from opposed ribs 38 to exterior case 3 and dissipated to the outside as indicated by arrow h.

Battery pack described above is assembled in the following steps.
(1) Secondary battery cells 1 are housed in battery holder 2. Battery holder 2 illustrated in Figs. 3 and 4 includes the three members. After holder lid parts 2B are fixed to one opening of holder tubular part 2A, secondary battery cells 1 are inserted into battery storage portions 20 of respective holding tubular parts 21. After secondary battery cells 1 (eight secondary battery cells 1 in the drawings) are inserted into all holding tubular parts 21 of holder tubular part 2A in correct orientations, holder lid parts 2B are fixed to the opening on the opposite side to close the opening.
(2) Lead plates 13 are connected to electrodes at both ends of secondary battery cells 1 housed in battery holder 2. The electrodes at both ends of secondary battery cells 1 are connected via lead plates 13, and secondary battery cells 1 are connected in a predetermined connection state. In the drawings, eight secondary battery cells 1 are connected in the four-parallel, two-series configuration via lead plates 13.
(3) Circuit substrate 12 is disposed on the upper surface of battery holder 2, and lead plates 13 connected to secondary battery cells 1 are connected to circuit substrate 12. In this state, circuit substrate 12 is fixed to battery holder 2 via lead plates 13 to form battery assembly 10.
(4) Heat conductive paste 15 is applied to the plurality of fitting recesses 5 formed in battery holder 2. In battery holder 2 illustrated in the drawing, groove portion 27 formed in the lower surface and groove portion 27 formed in undercut face 28 are formed as fitting recesses 5, and therefore heat conductive paste 15 is applied to these fitting recesses.
(5) Battery assembly 10 is housed in main body case 3A. In this case, while the plurality of heat conduction protrusions 7 disposed on bottom plate portion 31 of main body case 3A are guided to fitting recesses 5 disposed on the lower surface of battery holder 2, the plurality of heat conduction protrusions 7 disposed on inclined part 32A of side surface plate portion 32 are guided to fitting recesses 5 disposed on undercut face 28 of battery holder 2, whereby heat conduction protrusions 7 are fitted into fitting recesses 5. In this state, the battery assembly is disposed at a predetermined position of the main body case.
(6) Lid case 3B is coupled to the opening edge of main body case 3A, and the upper opening of main body case 3A is closed by lid case 3B.

### (Second exemplary embodiment)

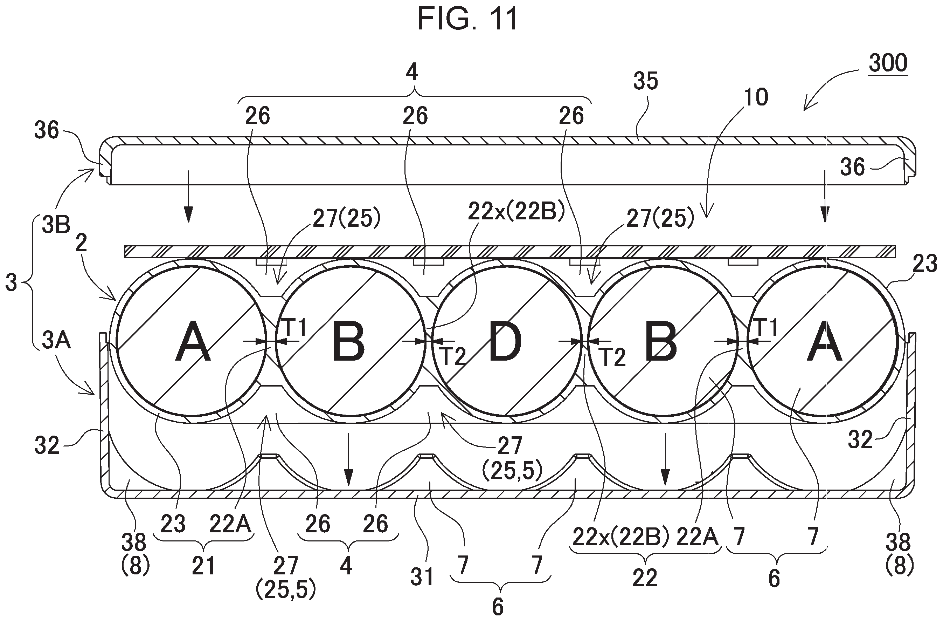

In the above example, the plurality of secondary battery cells 1 are arranged in one row in the diameter direction to form battery row 11, and two battery rows 11 are arranged vertically while being shifted in position in the lateral direction so as to be in a staggered stacking orientation in two upper and lower tiers. However, the battery pack can also be constituted by battery row 11 including the plurality of secondary battery cells 1 arranged in one row in the diameter direction. Battery pack 300 having this structure is illustrated in Fig. 11. In battery pack 300 illustrated in Fig. 11, five secondary battery cells 1 are housed in battery holder 2 in a state of being arranged in a row in a diameter direction in orientations parallel to each other, and battery holder 2 is housed in exterior case 3 as battery assembly 10. In the second exemplary embodiment, the same components as those of the battery pack of the first exemplary embodiment are denoted by the same reference signs, and detailed description thereof is omitted.

Battery holder 2 illustrated in Fig. 11 is integrally molded in a shape in which five holding tubular parts 21 are aligned and coupled in the diameter direction so as to be able to house five secondary battery cells 1. As shown in Fig. 11, in battery row 11 in which the plurality of secondary battery cells 1 are arranged in one row in the diameter direction (lateral direction in the drawing), secondary battery cells 1 positioned at both ends are target battery cells A where the number of adjacent secondary battery cells 1 is the smallest (one in the drawing). The number of secondary battery cells 1 adjacent to each laterally adjacent battery cell B adjacent to target battery cell A in the lateral direction and the number of secondary battery cells 1 adjacent to intermediate battery cell D positioned at a central portion are two. Therefore, in this arrangement, regarding laterally adjacent battery cells B and intermediate battery cell D where the number of adjacent secondary battery cells 1 is two, even if an abnormality occurs, the number of adjacent secondary battery cells 1 is large, and thus the heat capacity of adjacent secondary battery cells 1 is large, and fire spreading is suppressed as secondary battery cells 1 absorb heat. On the other hand, regarding target battery cells A where the number of adjacent secondary battery cells 1 is one and is the smallest, the number of adjacent secondary battery cells 1 is small and the heat capacity of secondary battery cells 1 is also small, and thus target secondary battery cell 1 is most likely to cause fire spreading. Therefore, in battery pack 300, by increasing the thicknesses of partition wall parts 22 formed between secondary battery cells 1 adjacent to target battery cells A and the target battery cells A, heat conduction from target battery cells A to adjacent secondary battery cells 1 is suppressed.

Partition wall parts 22 of battery holder 2 illustrated in Fig. 11 include target partition wall part 22A formed between target battery cells A and laterally adjacent battery cells B, and non-target partition wall parts 22B formed between secondary battery cells 1 (laterally adjacent battery cells B and intermediate battery cell D) excluding target battery cells A, and a thickness (T1) of target partition wall part 22A is greater than an average value (Ta) of thicknesses of all partition wall parts 22 to suppress heat conduction with adjacent secondary battery cells 1. In battery pack 100, target partition wall part 22A between target battery cells A and secondary battery cells 1 adjacent to target battery cells A is thickened to widen intervals between target battery cells A and secondary battery cells 1 adjacent to target battery cells A to prevent fire spreading. In addition, the thicknesses of non-target partition wall parts 22B are reduced to suppress an increase in the outer shape of the battery holder. In battery holder 2 illustrated in Fig. 11, non-target partition wall part 22B is specific partition wall part 22x, and the thickness (T2) of specific partition wall part 22x is less than or equal to the average value (Tb) of the thicknesses of all non-target partition wall parts 22B. In battery pack 300 described above, by increasing the thickness (T1) of target partition wall part 22A formed between target battery cells A and laterally adjacent battery cells B and reducing the thickness (T2) of non-target partition wall part 22B formed between laterally adjacent battery cells B and intermediate battery cell D as specific partition wall part 22x to offset the thickness (T1) of target partition wall part 22A and the thickness (T2) of specific partition wall part 22x against each other, it is possible to suppress an increase in the outer shape of battery holder 2. Note that the thickness (T1) of target partition wall 22A and the thickness (T2) of specific partition wall part 22x in battery holder 2 illustrated in Fig. 11 can be in the above-described ranges.

Further, in battery holder 2 having the above-described shape, similarly to battery holder 2 described above, connecting ribs 26 in a plurality of rows are disposed as heat capacity part 4 in valley portion 24 formed in a plurality of rows on the lower surface, and groove portions 27 are disposed between connecting ribs 26 adjacent to each other to form sink mark prevention recesses 25. Sink mark prevention recesses 25 serve as fitting recesses 5 to which the plurality of heat conduction protrusions 7 disposed so as to protrude from the bottom surface of exterior case 3 in which battery holder 2 is housed are guided. In battery holder 2, on the lower surface side, heat conduction protrusions 7 disposed in exterior case 3 are fitted into fitting recesses 5, so that coupling heat capacity part 6 disposed in exterior case 3 and heat capacity part 4 of battery holder 2 can be coupled without a gap and thermally coupled. In this structure, all holding tubular parts 21 in which secondary battery cells 1 are housed in one row in battery holder 2 can be thermally coupled to exterior case 3 via heat capacity part 4 and coupling heat capacity part 6, so that heat of secondary battery cells 1 can be effectively conducted to exterior case 3 and dissipated even in a state where any of secondary battery cells 1 generates heat.

Further, in battery holder 2 illustrated in Fig. 11, connecting ribs 26 arranged in the plurality of rows are disposed as heat capacity part 4 also in valley portion 24 formed in the plurality of rows on the upper surface of battery holder 2, and groove portions 27 are disposed between connecting ribs 26 adjacent to each other to form sink mark prevention recesses 25. Groove portions 27 formed on the upper surface function as sink mark prevention recesses 25 without being also used as fitting recesses 5 since heat conduction protrusion 7 facing a groove portions is not present. Heat capacity part 4 is divided into the plurality of connecting ribs 26, and groove portions 27 are disposed between connecting ribs 26, so that the surface area of heat capacity part 4 can be increased and the heat dissipation characteristics can be improved.

As described above, battery holder 2 that houses battery row 11 in one tier has a problem that battery holder 2 is weak against impact or the like because the plurality of holding tubular parts 21 are connected in a state of being arranged in the same plane. However, since battery holder 2 illustrated in the drawing is provided with connecting ribs 26 in valley portion 24 formed between adjacent holding tubular parts 21 on the upper and lower surfaces, adjacent holding tubular parts 21 are reinforced by connecting ribs 26, and the rigidity of battery holder 2 can be increased to improve the impact resistance characteristics. Further, on the lower surface side of battery holder 2, heat capacity part 4 of battery holder 2 and coupling heat capacity part 6 of exterior case 3 are coupled by the fitting structure, so that battery holder 2 and exterior case 3 can be reliably thermally coupled to dissipate heat while battery holder 2 is reinforced.

Further, although not illustrated, in the examples of the present disclosure, it is also possible to adopt a structure in which battery rows each having a plurality of secondary battery cells arranged in the diameter direction are stacked in three or more tiers and housed in the battery holder. Also in this case, a secondary battery cell disposed at a position where the number of adjacent secondary battery cells is the smallest is set as a target battery cell, and the thickness (T1) of the target partition wall part formed between the target battery cell and an adjacent secondary battery cell is increased to prevent adverse effects on the target battery cell.

### INDUSTRIAL APPLICABILITY

The battery pack according to the present disclosure can be suitably used for applications such as power supplies for portable electric devices such as portable medical devices, electric cleaners, and electric tools, or as a battery pack for moving bodies such as assist bicycles and electric carts.

### REFERENCE MARKS IN THE DRAWINGS

100, 300: battery pack
1: secondary battery cell
1A: first end surface
1B: second end surface
2: battery holder
2A: holder tubular part
2B: holder lid part
3: exterior case
3A: main body case
3B: lid case
4: heat capacity part
5: fitting recess
6: coupling heat capacity part
7: heat conduction protrusion
7A: curved surface
7B: vertical plane
7a: chamfered portion
8: second coupling heat capacity part
8A: curved surface
10: battery assembly
11: battery row
12: circuit substrate
13: lead plate
15: heat conductive paste
20: battery storage portion
21: holding tubular part
22: partition wall part
22A: target partition wall part
22B: non-target partition wall part
22x: specific partition wall part
22y: suppression partition wall part
22z: intermediate partition wall part
23: outer peripheral wall part
24: valley portion
25: sink mark prevention recess
26: connecting rib
27: groove portion
28: undercut face
31: bottom plate portion
32: side surface plate portion
32A: inclined part
32B: vertical part
33: end surface plate portion
34: gap
35: top plate portion
36: peripheral wall part
38: opposed rib
41: holding portion
42: electrode window
81: holding tubular part
82: partition wall part
83: outer peripheral wall part
90: battery row
91: secondary battery cell
92: battery holder
A: target battery cell
B: laterally adjacent battery cell
C: vertically adjacent battery cell
D: intermediate battery cell

## Claims

1. A battery pack comprising:
a plurality of secondary battery cells;
a battery holder that houses the plurality of secondary battery cells; and
an exterior case that houses the battery holder, wherein
each of the plurality of secondary battery cells is a cylindrical battery, and among the plurality of secondary battery cells housed in the battery holder, at least one secondary battery cell disposed at a position having a smallest number of adjacent secondary battery cells is defined as a target battery cell,
the battery holder includes a plurality of holding tubular parts each of which houses a corresponding one of the plurality of secondary battery cells inside, the plurality of holding tubular parts being integrally molded to hold the plurality of secondary battery cells in parallel to each other,
the plurality of holding tubular parts include:
partition wall parts formed between adjacent secondary battery cells among the plurality of secondary battery cells; and
an outer peripheral wall part defining an outer surface of the battery holder,
the partition wall parts include:
a target partition wall part formed between the target battery cell and a secondary battery cell adjacent to the target battery cell; and
non-target partition wall parts formed between adjacent secondary battery cells other than the target battery cell, and
a thickness of the target partition wall part is greater than an average value of thicknesses of all the partition wall parts, to suppress heat conduction between adjacent secondary battery cells among the plurality of secondary battery cells.

2. The battery pack according to Claim 1, wherein
a non-target partition wall part having a minimum thickness among the non-target partition wall parts is defined as a specific partition wall part, and
a thickness of the specific partition wall part is less than or equal to an average value of thicknesses of all the non-target partition wall parts.

3. The battery pack according to Claim 2, wherein
in the battery holder, the plurality of holding tubular parts are arranged to house, in a plurality of tiers, a plurality of battery rows in which the plurality of secondary battery cells are arranged in a diameter direction,
the plurality of battery rows stacked in the plurality of tiers are arranged such that, between a battery row arranged in a lower tier and a battery row arranged in an upper tier, the secondary battery cells in one of the plurality of battery rows are positioned in valleys defined by the adjacent secondary battery cells in another of the plurality of battery rows, and
in the battery holder, the non-target partition wall parts between the adjacent secondary battery cells other than the target battery cell in each of the battery rows are each defined as the specific partition wall part.

4. The battery pack according to Claim 3, wherein
in the battery holder, the plurality of holding tubular parts are arranged to house, in two tiers, the plurality of battery rows in which the plurality of secondary battery cells are arranged in the diameter direction,
in the plurality of battery rows stacked in the two tiers, target battery cells are arranged at one end of the battery row in the lower tier and at an opposite end of the battery row in the upper tier, respectively, and
lateral positional offset between the battery row in the lower tier and the battery row in the upper tier is less than or equal to a radius of each of the plurality of secondary battery cells.

5. The battery pack according to Claim 3, wherein
in the battery holder, the plurality of holding tubular parts are arranged to house, in two tiers, the plurality of battery rows in which the plurality of secondary battery cells are arranged in the diameter direction,
an angle defined between a center line, which connects a center of the target battery cell and a center of a laterally adjacent battery cell adjacent to the target battery cell in a lateral direction, and a center line, which connects the center of the target battery cell and a center of a vertically adjacent battery cell adjacent to the target battery cell in a vertical diagonal direction, is greater than 60 degrees, and
the non-target partition wall part between the laterally adjacent battery cell and the vertically adjacent battery cell is defined as a suppression partition wall part, and a thickness of the suppression partition wall part is greater than the thickness of the target partition wall part.

6. The battery pack according to Claim 2, wherein
in the battery holder, the plurality of holding tubular parts are arranged to house a single battery row in which the plurality of secondary battery cells are arranged in a diameter direction,
the plurality of secondary battery cells positioned at both ends of the single battery row are defined as the target battery cells, and
in the battery holder, the non-target partition wall parts between the adjacent secondary battery cells other than the target battery cell are each defined as the specific partition wall part.

7. The battery pack according to any one of Claims 2 to 6, wherein
a difference between the thickness of the target partition wall part and the thickness of the specific partition wall part is greater than or equal to 3.5% of a radius of each of the plurality of secondary battery cells.

8. The battery pack according to any one of Claims 2 to 6, wherein
the thickness of the target partition wall part is greater than or equal to 1.5 mm, and the thickness of the specific partition wall part is less than or equal to 1.1 mm.

9. The battery pack according to any one of Claims 1 to 6, wherein
the battery holder includes a heat capacity part that is coupled to an outer side of the plurality of holding tubular parts to absorb heat of the plurality of secondary battery cells conducted from the plurality of holding tubular parts,
the heat capacity part is positioned in a valley portion defined between adjacent holding tubular parts among the plurality of holding tubular parts, and includes a plurality of connecting ribs that is arranged in an extending direction of the valley portion and connects the adjacent holding tubular parts to each other,
each of a plurality of groove portions is formed between adjacent connecting ribs among the plurality of connecting ribs, and
each of the plurality of groove portions serves as a sink mark prevention recess during resin molding of the heat capacity part.

10. The battery pack according to Claim 9, wherein
the exterior case includes a coupling heat capacity part on an inner surface of the exterior case, the coupling heat capacity part being thermally coupled to the battery holder to absorb heat conducted from the battery holder,
the coupling heat capacity part includes a plurality of heat conduction protrusions protruding from the inner surface of the exterior case, and the plurality of heat conduction protrusions are disposed at positions facing the plurality of groove portions disposed in the battery holder,
in the battery holder, the plurality of groove portions are formed as a plurality of fitting recesses into which the plurality of heat conduction protrusions are fitted, and
in a state where the battery holder is housed in the exterior case, the plurality of heat conduction protrusions and the plurality of fitting recesses are fitted to thermally couple the battery holder and the exterior case, and heat generated from the plurality of secondary battery cells is conducted from the battery holder to the exterior case and is dissipated to outside.

11. A battery pack comprising:
a plurality of secondary battery cells;
a battery holder that houses the plurality of secondary battery cells; and
an exterior case that houses the battery holder, wherein
each of the plurality of secondary battery cells is a cylindrical battery, and among the plurality of secondary battery cells housed in the battery holder, at least one secondary battery cell disposed at a position having a smallest number of adjacent secondary battery cells is defined as a target battery cell, and
the battery holder includes a plurality of holding tubular parts each of which houses a corresponding one of the plurality of secondary battery cells inside, the plurality of holding tubular parts being integrally molded to hold the plurality of secondary battery cells in parallel to each other,
the plurality of holding tubular parts include:
partition wall parts formed between adjacent secondary battery cells among the plurality of secondary battery cells; and
an outer peripheral wall part forming an outer surface of the battery holder,
the partition wall parts include:
a target partition wall part formed between the target battery cell and a secondary battery cell adjacent to the target battery cell; and
non-target partition wall parts formed between adjacent secondary battery cells other than the target battery cell, and
a thickness of the target partition wall part is greater than an average value of thicknesses of all the partition wall parts, and
a thickness of each of the partition wall parts is, in a transverse sectional view of the battery holder, a thickness measured along a straight line connecting centers of adjacent secondary battery cells, and, in a case where a partition wall part has a curved portion along an outer peripheral surface of a corresponding one of the plurality of secondary battery cells, the thickness of the partition wall part is a thickness at a portion having a minimum thickness.

12. The battery pack according to Claim 11, wherein
the non-target partition wall part having a minimum thickness among the non-target partition wall parts is defined as a specific partition wall part.

13. The battery pack according to any one of Claim 12, wherein
a difference between the thickness of the target partition wall part and the thickness of the specific partition wall part is greater than or equal to 3.5% of a radius of each of the plurality of secondary battery cells.

14. The battery pack according to any one of Claim 12, wherein
the thickness of the target partition wall part is greater than or equal to 1.44 mm, and the thickness of the specific partition wall part is less than or equal to 1.1 mm.

15. The battery pack according to Claim 11, wherein
the battery holder includes heat capacity parts that are connected to outer sides of the plurality of holding tubular parts to absorb heat of the plurality of secondary battery cells conducted from the plurality of holding tubular parts,
each of the plurality of heat capacity parts includes a plurality of connecting ribs,
each of the plurality of connecting ribs is positioned in a valley portion defined between adjacent holding tubular parts,
the plurality of heat capacity parts are arranged along axes of the plurality of holding tubular parts and connect the adjacent holding tubular parts to each other, and
a space having a depth reaching a bottom of the valley portion is disposed between each pair of the plurality of connecting ribs adjacent to each other.
